# EUROPEAN PATENT APPLICATION

(11) **EP 4 792 659 A1**
(43) Date of publication of application: **19.08.2026**
(21) Application number: 23817945.1
(22) Date of filing: 19.10.2023
(51) Int. Cl.: A23L 19/00, A23P 10/40

(54) **BIOMATERIAL MANUFACTURED BY THERMOMECHANICAL CONVERSION OF VEGETABLE POMACES, MICRONIZED POWDER, AND USE OF SAME**

(71) Applicant: BIOGRAPES & FRUITS SPA, Huechuraba (CL)
(72) Inventor: ELGUETA CAROCA, Santiago Francisco, SANTIAGO (CL); KARQUE ORTEGA, Rafael Patricio, SANTIAGO (CL)
(74) Representative: Linage González, Rafael
(86) International application number: PCT/CL2023/050093
(87) International publication number: WO 2025/081290

(57) **Abstract**

The present invention is centered on the creation of a novel biomaterial characterized by vitreous-like properties, originating from the thermomechanical transformation of vegetable pomace generated by agro-industrial processes. The distinct morphology, uniformity, porosity, and numerous stress concentration points confer to this novel biomaterial quasi-brittleness properties, which aids in its conversion into an ultrafine powder with high bioavailability. This powder is distinguished by its exceptional dispersibility and organoleptic attributes. The resulting micronized functional ingredient boasts remarkable versatility, integrating flawlessly into both solid and liquid product matrices. It facilitates the creation of stable, easily processable products suitable for mass industrial production. These attributes render it an optimal ingredient for diverse applications within the food, cosmetic, nutraceutical, and pharmaceutical sectors.

## Description

### FIELD OF THE INVENTION

This invention pertains to the development of a biomaterial characterized by its vitreous properties, rendering it highly susceptible to pulverization. It encompasses a micronized ingredient, possessing multifunctional attributes, derived from the pulverization of the aforementioned biomaterial. Furthermore, this invention details the manufacturing process of the biomaterial, which involves the thermomechanical transformation of vegetable pomaces.

### BACKGROUND

### AGRO-INDUSTRY

The agro-industry is an essential sector in the global economy, playing a significant role in food production and the supply chain. However, this sector generates a large amount of waste each year, including crop residues, food processing by-products, and animal waste. Inadequate disposal of these wastes can lead to serious environmental and health impacts, such as soil and water contamination, greenhouse gas emissions, and the spread of diseases linked to poor waste management.

To mitigate these adverse effects, it is essential to explore sustainable ways to valorize ("upcycle") agro-industrial waste, transforming them into high-value-added resources or innovative final products that can be productively utilized. Efficient use of agro-industrial waste not only reduces environmental pollution but also enhances sustainability and provides economic benefits to farmers, industry, and community at large. Thus, waste upcycling could play a significant role in transitioning the agro-industry towards a circular economy model.

### VEGETABLE POMACES

### Vegetable Pomaces: Negative Environmental Impact

As elucidated in the ensuing discussion, it is a global phenomenon that a predominant portion of vegetable pomaces, by-products of the agro-industrial processes, are either directly relegated to the environment or relegated to the creation of products with minimal value enhancement, a practice commonly referred to as downcycling. Remarkably, a mere fraction, less than 1%, of the global output of pomaces undergoes upcycling. Within this marginal percentage, the majority is channeled towards the creation of value-added products. It is critical to underscore that the production processes for these enhanced products are characterized by notably low productivity levels, high energy consumption resulting in production volumes that are diminutive and almost artisanal in nature, thereby shaping niche market ventures. This scale of operation is insufficient for these processes to elevate to a fullfledged industrial, mass-production stature. Furthermore, an infinitesimal proportion of this 1% is devoted to the fabrication of products distinguished by its high added-value.

Recapitulating, currently a portion of vegetable pomaces are directly discarded into the environment, being deposited in landfills or aquatic bodies such as rivers, lakes, and seas, scattered on unoccupied lands, or simply accumulated at the facilities of agro-industrial companies (see next point 1). A fraction of vegetable pomaces is used in the transformation of new products of equal or lesser value (downcycling), such as animal feed and compost (see next point 2). A minimal percentage is allocated for the artisanal-level production of medium-value-added products (see next point 3), and an even smaller portion is utilized for the production of high added-value products (see next point 4). As already mentioned, the volume of pomace allocated to these last two products is estimated not to exceed 1% of the total production of vegetable pomaces.

### Vegetable Pomaces: Types of Disposals or Utilization

1. Direct discard into the environment: the practice of directly disposing of vegetable pomaces into the environment manifests in various forms, including:
   - Unmitigated disposal into natural environments.
   - Placement in landfills or aquatic ecosystems, including rivers, lakes, and oceans.
   - Dissemination across uninhabited terrains.
   - Accumulation at the premises of agro-industrial entities.
2. Downcycling: a significant segment of the world's vegetable pomace undergoes a process commonly known as downcycling, where it is utilized in creating products of equal or diminished value. This practice involves the repurposing of by-products from the vegetable processing industry, yet it does not enhance their inherent value. Notable examples include:
   - Animal Feed: Utilization of grape pomace, pulp, and de-oiled grapeseed in animal nutrition.
   - Energy Production: Fabrication of pellets from grape marc residues.
   - Soil Fertilization and Enhancement: Grape marc flour is leveraged as an agricultural fertilizer. Its rich organic composition enhances soil structure and contributes essential nutrients.
3. Value Added Products: owing to their limited production output, these products are inherently tailored for a niche market segment. The production volume, reminiscent of artisanal craftsmanship, precludes the feasibility of scaling up to widespread, industrial-level mass production.
   - Vegetal Pomace Seed Powder: This ground powder, derived from vegetable seeds, is prevalently utilized in the manufacturing of dietary supplements and beauty products, owing to its rich nutritional content.
   - Vegetal Pomace Skin Powder: Crafted from dehydrated and pulverized vegetal skins, this powder finds its application in both nutritional supplements and food products, significantly enhancing their nutritional value.
   - Whole Vegetal Pomace Powder: Encompassing all components of vegetal pomaces, including skins, seeds, and stems, this powder is a sought-after addition in the food industry, valued for its high fiber content and antioxidant properties.
   - Vegetal Pomace spirits.
   - Creams and body oils made from vegetable pomaces
4. High Value-Added Products:
   - Tartaric Acid Production.
   - Polyphenols and Tannins Production: Employed as natural colorants in the food sector and crucial in the winemaking industry for preserving the color integrity of wines.
   - Extraction of Specific Compounds: extract of specific compounds such as essential oils, antioxidants, or natural colorants.
   - Vegetal Pomace Seed Oil Extraction: This versatile oil, extracted from vegetables seeds, is widely used in culinary preparations and in the formulation of cosmetic products.
   - Extraction of Bioactive Compounds: A specialized process aimed at isolating bioactive compounds.

The scenario depicted and elucidated not only presents a hazard to both public health and the environment but also culminates in a substantial detrimental environmental impact. Hence, the development and implementation of innovative, cost-effective technologies that facilitate the upcycling of agro-industrial waste into value-added, novel products are imperative. Such advancements can foster more efficient and sustainable utilization of natural resources, significantly diminish waste production, and enhance the resilience of the agro-industrial ecosystem. This approach not only benefits the wider community but also stimulates economic growth by creating innovative products. Embracing these technologies is pivotal in driving a shift towards more responsible and sustainable industrial practices.

### Vegetable Pomaces: Novel Vitreous Biomaterial

In the context of vegetable pomace processing, the challenge lies in overcoming specific bottlenecks within the production cycle, notably impacting the mass production of high-value vegetable pomace powders, these bottlenecks are predominantly encountered in the milling stage of this process and is created by the complex, heterogeneous structure of the vegetal pomaces, where seeds and skins are intricately interwoven. Their distinct viscoelastic and thermoplastic properties lead to considerable energy dissipation during grinding, compounded by the release of fatty acids from milled seeds, which form a viscous, hard-to-triturate paste, necessitating additional energy input.

An innovative solution emerges from advancements in material science, particle science and thermomechanical processes, where dedicated research and development efforts culminated in the development of a thermomechanical process capable of transforming vegetable pomaces into novel, quasi-brittle biomaterials highly amenable to grinding. This technological breakthrough successfully debottlenecks the vegetable pomace powder process, significantly boosting productivity and curbing energy consumption.

### Vegetable Pomaces: Circular Economy

The circular economy is an economic model that proposes decoupling growth from the excessive consumption of natural resources, in contrast to the traditional linear economic model which follows a pattern of take, make, and dispose. In the circular economy, the aim is to reduce, reuse, and recycle materials as much as possible, extending the lifespan of products, minimizing waste, and creating systems that allow for efficient recovery and reuse of resources. Instead of an end-of-life approach, circular design implies a life-cycle approach, where products are upcycled.

### Vegetable Pomaces: Invention

The present invention encapsulates the essence of the circular economy and upcycling in an industrial and sustainable context. The company capitalizes on vegetable pomaces, agro-industrial waste, as raw material. This aligns the present invention with the principles of the circular economy that advocate for waste reduction. The transformation of these vegetable pomaces into a novel vitreous biomaterial susceptible to generate high-value-added micronized powders through an advanced proprietary thermomechanical process is a clear example of upcycling, where a lower-value material is elevated to one of higher value and utility. The proposed process maximizes resource use by utilizing 100% of the vegetable pomaces and proposes a zero-waste production, enabling the tangible implementation of circular economy principles. By offering these micronized powders to various industries such as food, cosmetic, nutraceutical, and pharmaceutical, the company is supporting the creation of new markets. Inter-industrial collaboration with agro-industrial companies, which provide the raw material, illustrates a symbiotic relationship essential for a successful circular economic model, creating an integrated and sustainable system that benefits multiple stakeholders. This constitutes a real manifestation of a circular economic model and upcycling, opening the possibility for agro-industrial companies to migrate towards a circular economy model.

### Vegetable Pomaces: Proposed Process: Productivity

The technology proposed in this invention stands out from conventional methods currently available in the state of the art, thanks to its high productivity which facilitates the industrial-scale manufacturing of high-value-added micronized powders. This creates the necessary potential to process 100% of the vegetable pomace waste from any agro-industrial operation in an economically sustainable manner, regardless of the annual waste generation rate. The high productivity of the process, coupled with the significant value added of the micronized powders, translates into higher prices, which in turn generate the essential financial resources to economically sustain the production operation of the new biomaterial from the conversion of vegetable pomace and its subsequent micronization to obtain the multifunctional ingredient. The process layout main unitary operations are susceptible to be 100% outsourced from third parties, rendering possible to implement this process in a first operational stage in any geographical location where a relevant agro-industrial sector exists with no related investment in fixed production assets.

### Vegetable Pomaces: Proposed Process: Particle Size

By decreasing the size of particles, a significant increase in the specific surface area is achieved, leading to a faster dissolution rate of the ingredients. This process is key in enhancing both bioaccessibility and bioavailability, which are essential properties for these kinds of ingredients. As a result, a superior final product is attained, characterized by a homogeneous distribution of ingredients and an enhanced sensory experience. Thus, ingredients subjected to particle size reduction, such as through micronization processes, emerge as a prime choice for supplements. They can be seamlessly integrated into various product matrices, notably enhancing sensory attributes like palatability and texture in the resulting products.

### Vegetable Pomaces: Proposed Process: Bioactive Compounds

In this context, the waste from agro-industrial processes, known as vegetable pomaces, generated during the crushing and/or pressing stages in the production of juices, oils, wines, pastas, sauces, among others, which include the skins and/or seeds of fruits and vegetables, contain significant phytochemical compounds that are beneficial to human health. These include grape, olive, pomegranate, berries, and tomato pomaces, among others, also known as marc or bagasse. The majority of these are often directly discarded into the environment.

### Vegetable Pomaces: Proposed Process: Productivity: Bioaccessibility and Bioavailability of Bioactive Compounds

Vegetable pomaces are a source of various health-beneficial bioactive compounds, thus holding potential to be used as multifunctional ingredients in the food, cosmetic, nutraceutical, and pharmaceutical industries.

The biological benefits of bioactive compounds depend on their bioaccessibility and bioavailability. Bioaccessibility refers to the amount of a substance that is released from a vegetable matrix and is available for absorption in the gastrointestinal tract during digestion. Bioavailability refers to the fraction of a bioaccessible substance that is absorbed and available to perform its function in the body after ingestion. Bioavailability considers both the release and absorption of a substance in the body; it is a measure of the amount of the bioactive compounds that effectively reach the systemic circulation and are available to interact with cells. tissues and produce biological effects. Therefore, for a bioactive compound to be bioavailable, it must first be bioaccessible. The bioavailability of functional compounds is a critical factor in the effectiveness, prevention, and treatment of diseases.

### Vegetable Pomaces: Key Bioactive Compounds and their Health Benefits

Among the numerous health-beneficial compounds found in vegetable pomaces are antioxidants and fiber. Both are dietary factors that reduce the risk of cardiovascular diseases, diabetes, colon cancer, obesity, among other pathologies, and they act synergistically in their beneficial effects on health. The association between antioxidants and fiber is currently the subject of extensive scientific research.

### Antioxidants

compounds found in certain foods that help protect cells from damage caused by free radicals. Free radicals are unstable and highly reactive molecules generated as a result of normal metabolic processes in the body, and from external factors such as exposure to cigarette smoke, ultraviolet radiation from the sun, and environmental pollution. When present in excess, free radicals can damage cells and contribute to premature aging and various diseases, including cancer, heart diseases, neurodegenerative diseases, and particularly the so-called metabolic syndrome. This syndrome corresponds to a group of disorders that occur simultaneously and increase the risk of heart disease, stroke, and type 2 diabetes. These disorders include increased blood pressure, high blood sugar levels, excess body fat around the waist, and abnormal levels of cholesterol and triglycerides. Therefore, consuming foods rich in antioxidants helps prevent and treat these diseases by reducing cellular oxidative stress.

### Polyphenols

Are a group of antioxidant compounds found in a wide variety of plant-based foods, such as fruits, vegetables, whole grains, legumes, nuts, seeds, tea, coffee, cocoa, and red wine. These compounds are known for their antioxidant properties and potential health benefits. Polyphenols are characterized by having chemical structures with multiple phenolic groups. There are different classes of polyphenols, including flavonoids and non-flavonoids. Flavonoids are the largest and most well-known group of polyphenols and are subdivided into subclasses such as flavonols, flavones, flavan-3-ols (like catechins in green tea), anthocyanins (responsible for the red, blue, and purple colors of many fruits and vegetables), among others. Polyphenolic compounds have been extensively studied for their antioxidant properties, which help protect cells from damage by free radicals and reduce oxidative stress in the body. In addition to their antioxidant properties, polyphenols may also have anti-inflammatory, antimicrobial, and anticancer effects. They have been suggested to play a role in preventing chronic diseases such as cardiovascular diseases, type 2 diabetes, and certain types of cancer. It is important to note that the amount and bioavailability of polyphenols in foods can vary depending on the type of vegetable, maturity, and processing methods. Additionally, the absorption and metabolism of polyphenols in the human body are complex and can influence their biological activity.

### Dietary Fiber Dietary:

Also known as alimentary fiber or simply fiber, is the part of vegetable foods that cannot be digested by the human body. Although it is neither broken down nor absorbed, fiber is essential for good digestive health. Fiber is classified into two types: soluble and insoluble. Soluble fiber dissolves in water and forms a gel-like substance in the digestive tract. It is found in foods such as fruits, vegetables, legumes, and oats. Soluble fiber helps to lower blood cholesterol levels, regulate blood sugar levels, and maintain bowel regularity. On the other hand, insoluble fiber does not dissolve in water and has a tougher, fibrous texture. It is found in foods like wheat bran, whole grains, and green leafy vegetables. Insoluble fiber aids in maintaining a healthy digestive tract by promoting bowel regularity and preventing constipation.

### Antioxidant Dietary Fiber:

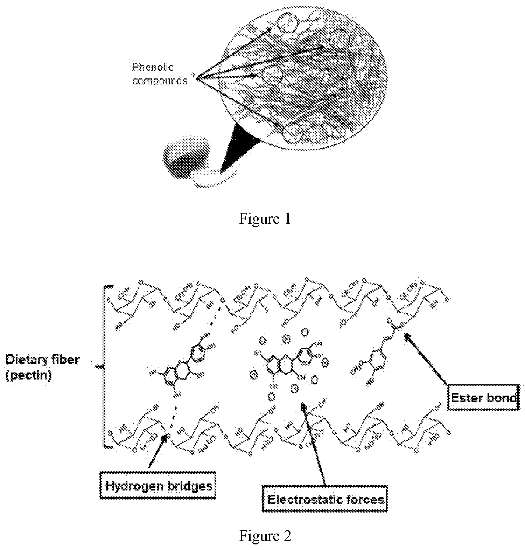

Antioxidant dietary fiber constitutes the primary distinctive functional structure of vegetable pomaces. A significant fraction of polyphenols and other antioxidants are embedded within a macromolecule called antioxidant dietary fiber. This dietary fiber is mechanically intertwined with polyphenols and other antioxidants (Figure 1).

The presence of phenolic compounds associated with dietary fiber is a common feature in vegetable foods rich in polyphenols, such as fruits. The complex group of polysaccharides forming dietary fiber can trap phenolic compounds or form chemical interactions with them. Phenolic compounds possess hydrophobic aromatic rings and hydrophilic hydroxyl groups capable of binding polysaccharides and proteins on the cell wall surface. These interactions can occur via hydrogen bonds, hydrophobic interactions, and covalent linkages. Typically, the dietary fiber compounds interacting with phenolic compounds include hemicellulose, pectin, and the hydroxyl group present in cellulose. The bonding between these molecules can occur through hydrophobic interactions and covalent bonds formed in the vegetable matrix (Figure 2).

The human gastrointestinal tract can be considered an extractor, where mastication and chemical action during the digestion phase contribute to the extraction of polyphenols from antioxidant dietary fiber. Specifically, the mechanical action of mastication influences the degradation of fruit cells, releasing the polyphenols contained in vacuoles and those associated with vegetable walls. Another portion of polyphenols present in antioxidant dietary fiber is released in the human gastrointestinal tract. This occurs through direct solubilization or by the action of digestive enzymes that hydrolyze non-covalent bonds. Polyphenols associated with antioxidant dietary fiber are minimally bioavailable in the human small intestine. For this reason, these macromolecules and the associated antioxidants embedded reach the colon, where they become fermentable substrates for bacterial microflora, contributing to an antioxidant environment, eliminating free radicals, and counteracting the effects of pro-oxidant compounds in the human diet.

### Vegetable Pomaces: Benefits for the Skin

Polyphenols also play a crucial role in promoting the biosynthesis of collagen and elastin, two essential proteins for skin health and elasticity. One mechanism through which they achieve this is by directly stimulating fibroblasts, specialized cells responsible for synthesizing these vital proteins. Fibroblasts are key to preserving skin structure and function, effectively acting as "collagen and elastin factories" within the dermis. Antioxidants, with their anti-inflammatory properties, activate these fibroblasts to increase collagen and elastin production. They not only neutralize free radicals that degrade these proteins but also modulate intracellular signaling pathways in fibroblasts, leading to an enhanced biosynthesis of collagen and elastin. In doing so, they significantly contribute to skin regeneration and repair, aiding in maintaining its firmness and elasticity. In essence, antioxidants act as a multifaceted stimulus for fibroblasts, amplifying their capacity to produce structural proteins imperative for healthy and rejuvenated skin. Furthermore, topical application or ingestion of antioxidant compounds, like those present in the micronized powders encompassed in this invention, can be promising strategies to combat skin aging and promote dermal health, further highlighting the importance of polyphenols in skin care.

### Vegetable Pomace: Potential for Functional Ingredient Development

Considering the health benefits of vegetable pomace, rich in bioactive compounds, its potential use in the development of functional ingredients for the food, cosmetic, nutraceutical, and pharmaceutical industries is evident. It is important to note that in food and cosmetic applications, these products must possess good technological and organoleptic properties. In recent years, there has been an increased interest in the development of functional ingredients that maximize the use of food resources.

### DESCRIPTION OF THE PREVIOUS ART

Prior art refers to studies on the upcycling processes of various types of vegetable pomaces and their applications. In the market of so-called superfoods, flours and extracts derived from vegetable pomaces are offered.

One such product is Santa EMMA's "Sangiovese Powder" (grape pomace flour) from Italy, which is produced through a self-described complex and lengthy process. This involves drying the grape marc in a perforated tray oven at a constant temperature of 42°C for three days. The material must be continuously stirred to prevent mold formation. Once dry, grape seeds are separated from the skins using a gravity vibratory separator, a meticulous and complex operation, but crucial for flour quality. Grape seeds contain oil, which can rancidify over time if spilled. After complete separation, the paste is milled to 250 microns, resulting in flour ready for consumption.

The product "Finger Lakes Wine Flour" is marketed as wine flours made from grapes grown in New York's Finger Lakes. These flours are made entirely from grape seeds and skins. After wineries press the grapes for their juice, the marc is transported to a small flour mill. The seeds and skins are handselected, separated, sun-dried, and stone-ground in an artisanal manner. This wine flour is suggested for use in combination with other flours, as it is a nutritional supplement for baking and cooking.

U.S. Patent US6544581 protects a grape extract and its extraction process, which involves extraction in water at temperatures between 60°C and 100°C. The obtained extract is then treated with a pectolytic enzyme and purified using an adsorbent resin, yielding a purified grape polyphenol extract. Spanish Patent ES 2586743 discloses a process for obtaining a functional ingredient from grape pomace. This process includes drying the grape pomace to a moisture content below 10%, grinding the dried pomace to reduce its size (preferably to 3 mm or smaller), extruding the ground material at working temperatures between 60°C and 110°C, and further drying to achieve a moisture content below 10%.

The patent application WO 2020028446 discloses ingredients, such as fruit pomace, and nutritional compositions, as well as systems and methods for recycling solid food waste and by-products into food-grade nutritional products. A system for producing recycled flour is described. This system includes an extruder, and optionally, a dryer and a mill. The extruder is used to release proteins, reduce water content, functionalize fiber, and reduce the biological load (i.e., eliminate bacteria). In some examples, the extruder is configured to process the food ingredient into cereal, pasta, puree, and similar products. The dryer is necessary to reduce water content and stabilize the product. The mill is used to reduce the particle size to a useful size for incorporating the ingredient into food.

The patent application ES 2935844 discloses a method for obtaining a phenolic extract from olive pomace using a natural acidic eutectic solvent (NADES). The publication also refers to the use of the phenolic extract as a nutraceutical, food ingredient, and phytosanitary agent, particularly for the treatment of microbial diseases. Additionally, the invention relates to the extracted olive pomace for composting and vermicomposting, especially as a fertilizer and/or organic amendment.

The patent application ES 2882167 discloses a method for obtaining a polyphenol-concentrated extract and a functional ingredient from olives. This method involves electric pulsing of olive paste, dehydration of the formed paste to a moisture content of less than 30% in a continuous vacuum drying equipment, subsequent separation of the oil through centrifugation of the olive paste. Next, the defatted pomace (olive pomace) is dehydrated to a moisture content of less than 10%, and it is finally extracted using supercritical fluids (CO2 with or without a modifier) on the dehydrated pomace under conditions of agitation, pressure, temperature, and time, resulting in olive pomace extracts and flour. The invention patent ES 2440168 discloses pomegranate flour and its method of obtaining, which is obtained from the pericarp, internal membranes, juiceless vesicles, and seeds (pomegranate pomace) mixed in appropriate quantities to obtain a dry powder with high content of proteins, fibers, minerals, long-chain carbohydrates, and low content of simple sugars. This is achieved using only physical and/or mechanical methods (selection and mixing, washing, dehydration/drying, and grinding/crushing). This flour is used as the main ingredient in food products, such as bakery and pastry items, nutraceuticals, pharmaceuticals, and cosmetics.

Patent ES 2645254 discloses a process for the preparation of an antioxidant nutritional compound without fructose, made from pomegranate fruit (peel, inner membranes, and seeds). It comprises the steps of extracting extractable polyphenols, dehydrating, and grinding to obtain a powder of extractable polyphenols and non-extractable polyphenols (pomegranate flour). The resulting compound from the described process is also protected by the patent.

Patent Application ES 2932480 reveals a pretreatment method to produce raw material for lycopene from tomato skin residue (tomato pomace). This involves uniformly mixing the tomato skin residue with a fermentation agent, an antioxidant, and an enzymatic preparation, followed by anaerobic lightresistant fermentation. The use of fermentation technology coupled with bacterial enzymes can extend the storage period of moist tomato skin residues and break down the cell wall of the tomato skin, facilitating the extraction of lycopene and improving its purity.

The state of the art also refers to processes for the upcycling of various types of vegetable pomaces and their potential applications. These processes generally involve two main unit operations: drying and grinding, through which vegetable pomaces are transformed into flours. The flours obtained through state-of-the-art processes have a coarse particle size due to the nature and complexity of the raw materials.

### UPCYCLING OF VEGETABLE POMACES

### Upcycling of Vegetable Pomaces: Complexity of Vegetable Pomaces as Raw Material

The primary issue with the processes developed thus far for pomace vegetable upcycling lies is the lack of consideration and understanding of the importance and complexity of the structure of vegetable pomaces. In most cases, vegetable pomaces exhibit a heterogeneous structure composed of mechanically interwoven seeds and skins, giving rise to a complex rheological behavior in this raw material, incorporating viscoelastic and thermoplastic rheological components, which often operate simultaneously. Conventional vegetable pomaces treatment for vegetable flours elaboration in most of the cases use exclusively a drying and grinding process approach.

The drying stage necessitates extended periods due to the physical entanglement of seeds with the skins, encapsulating or occluding portions of water (the "wet sandwich" effect), which are challenging to remove/dry. This requires subjecting this raw material to thermal shocks and prolonged exposure to high temperatures. Additionally, this process results in the degradation of thermolabile bioactive components present in the skins and seeds, leading to the loss of a significant amount of nutrients and beneficial bioactive compounds for health.

The grinding stage is highly inefficient because the skin in the pomace exhibits viscoelastic and thermoplastic characteristics that dissipate a significant portion of the energy intended for grinding.

The grinding technologies employed in the state of the art (hammer mills) are incapable of completely disintegrating the seeds, leaving residual fragments that impart a "gritty texture" to the final product, adversely affecting its sensory properties and strictly limiting its applicability to only a few food and cosmetic product matrices. Furthermore, when impacted by the mill's hammers, the seeds release their fatty acids (the "oil pockets" effect) into the mixture, resulting in a viscous paste with very low triturability, necessitating the injection of additional energy into the system. This viscous paste also causes the sieves used for size separation to become saturated, hindering the sieving operation and requiring additional sieving stages to attempt to recover the finer fractions, introducing another factor of inefficiency and cost into the process.

In summary, the sequence of unit operations employed in conventional processes for producing vegetable flour is suboptimal from a process engineering standpoint. Given the intricate structure and rheological behavior of vegetable pomaces, these traditional methods yield vegetable flours with coarse granulometries and subpar organoleptic textures. This results in diminished bioaccessibility and bioavailability. Consequently, such processes are marked by elevated operational costs, intensive energy consumption, and reduced productivity. The particle sizes generated by the processes described in the prior art make it difficult to incorporate the ingredient into different types of product matrices where it is desired to be added, mainly due to low dispersibility.

### Upcycling of Vegetable Pomaces: Importance of Particle Size in Micronized Powders Ingredients

The reduction in particle size enhances the dispersibility in product matrices where ingredients (micronized powders) made from vegetable pomaces are incorporated and ensure homogeneity of the mixture (resulting in a more uniform distribution in the product matrix), thus avoiding segregation, clumping, or agglomeration. This positively affects the appearance and texture of the final product. This is especially important for ingredients that need to be incorporated into product matrices such as doughs, solutions, emulsions, creams, shampoos, among others.

Quick and uniform dispersion guarantees an even distribution of the ingredient throughout the product, preventing segregation or the formation of undesirable phases. Dispersion is also closely related to the solubility of an ingredient. When an ingredient disperses well in a liquid medium, it is more likely to dissolve completely, increasing its availability and its ability to interact with other components in the product matrix.

Furthermore, good dispersibility also improves the efficiency of the final product manufacturing process. By easily dispersing, the ingredient can be incorporated more quickly and efficiently into the product's matrix and formulation, saving time and reducing production costs. The reduction in particle size dramatically increases the specific surface area, and consequently, the dissolution rate of the ingredients, thereby enhancing their bioaccesibility and bioavailability, central properties in these types of ingredients.

These characteristics contribute to obtaining a high-quality final product with a uniform distribution of ingredients and an improved sensory experience. Consequently, ingredients that have undergone particle size reduction processes, such as micronization processes, become an excellent alternative as supplements capable of being incorporated into product matrices, improving sensory properties such as palatability and texture of the manufactured products.

In the case of food matrices, it is essential that the manufactured product has good organoleptic properties, making it attractive to consumers. The flours mentioned in the prior art have a sandy texture that hinders their acceptance by consumers. These issues are caused by the coarse particle sizes obtained, significantly affecting the quality, sensory properties, and bioavailability of the final products.

The criticality of particle size and granulometry is particularly evident in the context of antioxidant dietary fiber and other bioactive compounds found in vegetable pomaces. Compounds such as pectins, cellulose, hemicellulose, and lignin, renowned for their health-promoting properties, encounter a significant challenge due to their only partial digestion within the human intestine. This limitation largely stems from the brief transit time of the food matrix encapsulating these compounds. When such a matrix, rich in antioxidant dietary fiber and hence endowed with antioxidant attributes, traverses the digestive system, it experiences a finite window for interaction with gastrointestinal fluids in the stomach and small intestine before assimilation into the bloodstream. If the specific surface area of this food matrix is minimal, it impairs the bioaccessibility and bioavailability of the embedded compounds. Diminishing the particle size enhances the specific surface area, thereby elevating the dissolution rate of these constituents. Furthermore, a reduced particle size intensifies the interaction of these bioactive compounds with digestive enzymes, gastrointestinal fluids, and microorganisms in the stomach and small intestine. Consequently, a smaller particle size significantly boosts the bioaccessibility and bioavailability of nutrients and bioactive compounds, such as polyphenols. This enhancement facilitates their release and absorption in the stomach, small intestine, and interaction with colon microflora, thereby optimizing their health benefits.

In the case of antioxidant dietary fiber, the majority of its fermentation in the large intestine is facilitated by intestinal bacteria. Particle size plays a crucial role in promoting the transit of antioxidant dietary fiber through the large intestine by enhancing its solubility, bioavailability, digestibility, and fermentation. Antioxidant dietary fiber serves as a vital source of nourishment for beneficial intestinal bacteria, and the reduction in particle size aids in its fermentation in the colon, where short-chain fatty acids (SCFAs) are produced, exerting positive effects on intestinal health.

Considering the aforementioned factors, arises a need to develop functional products derived from vegetable pomaces characterized by an ultrafine granulometry. These products should exhibit homogeneity and high dispersibility while containing elevated concentrations of bioactive compounds such as antioxidants, antioxidant dietary fiber, polyphenols, lipids, fiber, and proteins. Consequently, these functional products will exhibit high bioaccessibility and bioavailability. Moreover, in the food industry it is imperative for the product to possess favorable organoleptic properties to appeal to consumers.

The production process used to elaborate these ingredients must demonstrate high productivity and the capability to process substantial volumes of vegetable pomaces on an industrial mass scale to meet the extensive product demands of the food, cosmetic, nutraceutical, and pharmaceutical industries. This ensures the sustainability of the process, thereby offering a healthy, high-quality product that promotes the utilization of vegetable pomaces and contributes to environmental impact reduction.

### BRIEF DESCRIPTION OF THE INVENTION

The present invention provides a solution to the aforementioned problems by developing an intermediate semi-manufactured product from the processing of vegetable pomace generated by the agroindustry. This semi-manufactured intermediate product consists in the creation of a new biomaterial characterized by its vitreous properties, including homogeneity, porosity, and numerous stress concentration points that make it a brittle material. As a result, it can be easily micronized, yielding an ultrafine powder with high nutritional quality, excellent dispersibility, and outstanding organoleptic properties. These features enable the ingredient to be incorporated into solid and liquid product matrices, resulting in stable products.

The resulting natural ingredient contains high concentrations of phytochemicals such as polyphenols, dietary fiber, fatty acids, and proteins, making it nutritious and multifunctional. Additionally, the easily processable cylindroform biomaterial can be produced in large quantities, making it ideal for use in the food, cosmetics, nutraceutical, and pharmaceutical industries.

The transformation of vegetable pomace (raw material) into a biomaterial with vitreous characteristics and multifunctional properties is achieved through a thermomechanical conversion process, also known as the "vitreous transformation" or "vitrification" process. The developed process comprehensively transforms the vegetal pomace raw material from the agroindustry, converting a complex and heterogeneous material into a semi-manufactured product that possess homogeneity, porosity and numerous stress concentration points and consequently brittleness. These characteristics are essential for its micronization and the production of an ultrafine powder with high nutritional quality and excellent dispersibility, ensuring the quality of the final product.

The primary goal of this invention is to facilitate the processing of pomaces produced by the agro-industrial sector on an industrial scale. This process is uniquely designed to adeptly manage the intricate complexity of this vegetable-based material, ensuring a level of productivity that supports mass industrial production. The key achievement of this process is the creation of a novel biomaterial, which serves as a foundational semi-manufactured raw material. This biomaterial is instrumental in the production of micronized ingredients possessing multifunctional properties. These ingredients are ideally suited for integration into various product matrices across food, cosmetic, nutraceutical, and pharmaceutical industries, thereby expanding their potential applications and utility.

### BRIEF DESCRIPTION OF THE FIGURES

Figure 1: Schematic representation of dietary fiber.
Figure 2: Interactions in the vegetable matrix.
Figure 3: Micrographs of blueberry skin (3A) and grape pomace skin (3B).
Figure 4: Micrographs of the interior of grape pomace skin, with detail of the cell nucleus. Micrographs of parenchymal cells (cross-section).
Figure 5: Detail of amyloplasts and/or leucoplasts. (A) Potato cell micrograph (B) Grape skin micrograph.
Figure 6: Micrographs of the inner surface of grape skin.
Figure 7: Micrographs of the inner surface of grape skin.
Figure 8: Micrographs of the exterior of grape seed.
Figure 9: Micrographs of the interior of grape seed with details of different present crystals.
Figure 10: Micrographs of the interior of a grape seed (subcellular structures).
Figure 11: Micrograph of the external structure of the biomaterial with vitreous characteristics.
Figure 12: Micrograph of the external structure of the biomaterial with vitreous characteristics.
Figure 13: Micrographs of the inner zone of the biomaterial with vitreous characteristics.
Figure 14: Micrographs of micronized powder particles.
Figure 15: Diagram of a reactor for thermomechanical conversion.
Figure 16: Diagram of the diametrical compression test of the biomaterial.
Figure 17: Graph representing the compression force F vs. displacement d (Left). Graph representing the average force (right).
Figure 18: Graph representing the uniaxial compression force F vs. compression length d.
Figure 19: Photograph of a cylinder-shaped biomaterial used as a sample fragmented due to compression.
Figure 20: Graph showing the results of uniaxial traction tests.
Figure 21: (A) Graph representing the responses of the bulk compression test F vs. d carried out at equal volumes of cylinder-shaped biomaterial and grape pomace. (B) Graph showing the detail of graph (A).
Figure 22: Graph representing the granulometric evolution of sample 1 (grape pomace) in the triturability test.
Figure 23: Graph representing the granulometric evolution of sample 2 (cylinder-shaped biomaterial with vitreous characteristics) in the triturability test.
Figure 24: Representative micrographs of grape pomace (M1), biomaterial with characteristics vitreous (M2), and micronized ingredient (M3).
Figure 25: Micrographs of micronized powder (M3 A and B).
Figure 26: Histogram of size distribution of 273 particles.
Figure 27: ATR-FTIR spectra of samples of grape pomace (A), biomaterial with vitreous characteristics (B), and micronized powder (C).
Figure 28: UV-vis spectra for ethanol extraction products for samples of grape pomace, cylinder-shaped
   biomaterial with vitreous characteristics, and micronized powder.
Figure 29: Sessile Drop images obtained in contact angle measurements for the sample of cylinder-shaped biomaterial with vitreous characteristics with respect to grape pomace.
Figure 30: Water absorption curves over time for grape pomace and cylinder-shaped biomaterial with vitreous characteristics.
Figure 31: Graph with comparative values of percentages of moisture, total protein; fat, crude fiber, non-nitrogenous extract, and calories in kcal/100g of grape pomace, biomaterial, and micronized powder.
Figure 32: Graph of the concentration of total polyphenols in grape pomace, biomaterial, and powder micronized.
Figure 33: Graph of the antioxidant activity (ORAC) of grape pomace, biomaterial, and powder micronized.
Figure 34: Photograph of grape pomace before undergoing the thermomechanical conversion treatment.
Figure 35: Photograph of the biomaterial obtained from grape pomace.
Figure 36: Photograph of the micronized multifunctional ingredient from grape pomace.
Figure 37: Diagram of the thermomechanical reactor for the transformation of grape pomace into biomaterial with vitreous characteristics.
Figure 38: Diagram of the configuration of the thermomechanical reactor for the transformation of the grape pomace into biomaterial with vitreous characteristics.
Figure 39: Graph of Longitudinal Compression Force (per unit length) vs. (displacement) corresponding to the tests (F vs. d) of 20 samples of biomaterial from grape pomace.
Figure 40: Diagram of the thermomechanical reactor for the transformation of olive pomace into biomaterial with vitreous characteristics.
Figure 41: Diagram of the configuration of the thermomechanical reactor for the transformation of the olive pomace into biomaterial with vitreous characteristics.
Figure 42: Graph of Longitudinal Compression Force (per unit length) vs. (displacement) corresponding to the tests (F vs. d) of 9 samples of biomaterial from olive pomace.
Figure 43: Diagram of the thermomechanical reactor for the transformation of pomegranate pericarp into biomaterial with vitreous characteristics.
Figure 44: Diagram of the configuration of the thermomechanical reactor for the transformation of the pomegranate pericarp into biomaterial with vitreous characteristics.
Figure 45: Graph of Longitudinal Compression Force (per unit length) vs. (displacement) corresponding to the tests (F vs. d) of biomaterial from pomegranate pericarp.
Figure 46: Diagram of the thermomechanical reactor for the transformation of pomegranate aril into biomaterial with vitreous characteristics.
Figure 47: Diagram of the configuration of the thermomechanical reactor for the transformation of the pomegranate aril into biomaterial with vitreous characteristics.
Figure 48: Graph of Longitudinal Compression Force (per unit length) vs. (displacement) corresponding to the tests (F vs. d) of biomaterial from pomegranate aril.
Figure 49: Diagram of the thermomechanical reactor for the transformation of tomato pomace into biomaterial with vitreous characteristics.
Figure 50: Diagram of the configuration of the thermomechanical reactor for the transformation of the tomato pomace into biomaterial with vitreous characteristics.
Figure 51: Graph of Longitudinal Compression Force (per unit length) vs. (displacement) corresponding to the tests (F vs. d) of biomaterial from tomato pomace.
Figure 52: Diagram of the thermomechanical reactor for the transformation of blueberry pomace into biomaterial with vitreous characteristics.
Figure 53: Diagram of the configuration of the thermomechanical reactor for the transformation of the
   blueberry pomace into biomaterial with vitreous characteristics.

### DETAILED DESCRIPTION OF THE INVENTION

### Detailed Description of the Invention: Transformative Approach to Agro-Industrial Waste Management

The invention addresses critical environmental and sustainability challenges in the agro-industry. It innovatively manages and valorizes solid waste from pressing and crushing stages in the production of wines, juices, oils, and sauces. This approach aligns with the United Nations Sustainable Development Goals (SDGs) and international environmental treaties:

### Solid Waste Management and Reclamation

The invention eliminates solid waste, particularly vegetable pomaces, advancing towards United Nations SDG 12: Responsible Production and Consumption. It's in harmony with the Basel Convention, tackling the challenge of transboundary hazardous waste movements. This technology contributes to reducing landfill use, greenhouse gas emissions, soil, and water contamination, promoting a healthier global ecosystem.

### Waste Conversion to Micronized Ingredients

This state-of-the-art technology converts waste into valuable micronized ingredients for the food, cosmetic, nutraceutical, and pharmaceutical industries. This process embodies the circular economy, contributing to SDG 9: Industry, Innovation, and Infrastructure, and SDG 8: Decent Work and Economic Growth. It creates new market opportunities and jobs, particularly benefiting rural and agricultural sectors, and advocates for sustainable industrial methods.

### Efficiency in Energy and Productivity

The invention's high efficiency in productivity and reduced energy consumption aligns with SDG 7: Affordable and Clean Energy, and SDG 13: Climate Action. It demonstrates a shift towards more sustainable, energy-efficient industrial processes, critical for climate change mitigation and sustainable energy.

### Enhanced Bioavailability for Health Benefits

The micronized ingredients' small particle size significantly enhances bioavailability, aligning with SDG 3: Good Health and Well-being. This innovation improves the health impact of bioactive compounds, supporting nutrition and disease prevention.

### Local and Global Economic Development

Promoting local economic growth, the invention also contributes to a global agenda for sustainable industrial development, reducing the carbon footprint and enhancing community resilience against environmental challenges.

### Biodiversity Conservation and Ecological Impact

Addressing SDG 15: Life on Land, the invention supports global biodiversity conservation efforts. Responsible waste management maintains ecological balance and supports sustainable land use, preserving natural habitats.

### Innovation in Agro-Industrial Processes

The invention integrates cutting-edge technology to revolutionize waste processing in the agroindustry. By optimizing waste conversion, it sets new standards in resource utilization, demonstrating a commitment to innovative solutions for environmental challenges.

### Global Environmental Impact

The technology presents a model for sustainable industrial practices worldwide, potentially influencing policies and practices in waste management and resource conservation. Its global applicability and scalability can lead to widespread adoption, significantly impacting waste reduction and resource efficiency on a global scale.

### Technological Advancements and Research

The invention's development involved extensive research in material science, biochemistry, and environmental engineering. Future research directions include exploring new applications of micronized ingredients, further reducing energy consumption, and enhancing process scalability.

### Conclusion

This invention represents a paradigm shift in agro-industrial waste management and sustainable production. Its energy efficiency and productivity are crucial in mitigating environmental impacts, showcasing a holistic approach to climate action. As a technological and sustainable development solution, it addresses current environmental challenges and promotes a transition towards a circular and sustainable economy. Its impact extends beyond technology, embodying a commitment to a sustainable future and the potential to inspire similar innovations across industries.

### VITREOUS CILINDROFORM BIOMATERIAL

### Vitreous Cilindroform Biomaterial: Key Characteristics of the Biomaterial

The present invention focuses on the development of a new biomaterial with vitreous characteristics, preferably in a cylindroform geometry, enhancing its high triturability. This is achieved through thermomechanical conversion of vegetable pomaces generated in the agro-industrial sector. Due to their mechanical properties, these pomaces can be micronized, leading to a micronized ingredient with multifunctional properties, applicable as an ingredient in the food, nutraceutical, cosmetic, and pharmaceutical industries.

This invention also encompasses the manufacturing process of this new biomaterial, involving a unit operation for the thermomechanical conversion of agro-industrial vegetable pomaces.

To achieve a highly triturable biomaterial, an extensive analysis grounded in Material Science and Particle Science was conducted. This involved studying the structure, ultrastructure, microstructure, and properties of the vegetable pomaces, with an emphasis on rheological behavior models. This research facilitated the design, development and creation of a new biomaterial.

### Vitreous Cilindroform Biomaterial: Biomaterial: Design and Development

The conception and advancement of this novel biomaterial are grounded in three pivotal attributes. Firstly, it possesses vitreous characteristics, indicating that the biomaterial exhibits a quasi-brittle nature, is highly triturable, and readily pulverizable. Secondly, it features multifunctional properties, signifying a rich concentration of diverse bioactive compounds. Lastly, the biomaterial is designed to be easily manageable in subsequent processing stages, boasting a compact and manipulable form with a cylindroform geometry, measuring approximately 20 mm in length and 4 mm in diameter.

The study leading to this biomaterial initially focused on understanding the physiology of vegetable pomaces and their internal support structures that prevent collapse yet hinder triturability.

Analysis of 369 images using Scanning Electron Microscopy (SEM) concluded that the cellular-level support structures in vegetable pomaces are numerous and robust. Hence, to produce a new raw material with triturable attributes from these pomaces, their original vegetable matrix must be drastically altered. Among various processing alternatives, the design of thermomechanical conversion process was decided for its ability to dramatically modify the original vegetable matrix, resulting in an almost complete re-conversion of the initial vegetable pomace (raw material).

The new cylindroform biomaterial of this invention (with vitreous characteristics and multifunctional properties) must exhibit the following primary attributes:

### • High Level of Triturability

One of the principal objectives of this invention is to create a biomaterial that is easily pulverizable, thereby facilitating the industrial-scale production of a multifunctional ingredient with micrometerscale granulometry. The triturability of a material, a composite property encompassing hardness, porosity, homogeneity, stress concentration points, and toughness, is fundamental in industrial processes aiming for a fine powder end product. Brittleness, the most influential property in a material's triturability, implies that brittle materials tend to fragment more easily during grinding, reducing particle size with less effort and energy. Thus, the design and fabrication of the new biomaterial emphasize brittleness (vitreous characteristics) to ensure successful micronization.

State-of-the-art raw vegetable pomaces, with 5% moisture content, exhibit negligible brittleness (scientifically valued at zero), making their grinding complex, inefficient, and energy-intensive. In contrast, the thermomechanical conversion process endows the new biomaterial with homogeneity, porosity, and stress concentration points, which translate into "brittleness", enhancing grinding capability. Porous materials, with cavities in their structure, facilitate material fragmentation during grinding. These cavities or pores act as stress concentration points aiding in initiating micro-fissures prompting material collapse. Furthermore, porous materials often have lower density and mechanical strength than non-porous materials, further facilitating grinding.

Thus, by imparting vitreous characteristics, homogeneity, porosity, and stress generation points to the biomaterial, its triturability is enhanced.

### • High Concentration of Bioactive Compounds

The vitreous multifunctional biomaterial encapsulates the full functional value of the original vegetable pomace raw material. The thermomechanical conversion process leads to the disintegration of cell walls and rupture of certain vegetable ultrastructures in the pomaces, releasing valuable secondary metabolites. This results in a several-fold increase in the concentration of bioactive compounds in the resultant biomaterial, several-fold increase than that of the original vegetable pomace. Additionally, the micronization process drastically transforms the remaining vegetable ultrastructure, significantly increasing the specific surface area of the final product - a "micronized ingredient with multifunctional properties" - and further increase the concentration of bioactive compounds from the original biomaterial.

### • Geometry and Compactability Degree

The cylindroform biomaterial should possess a certain degree of compactability and a geometry and size that facilitate its easy handling in subsequent processing stages, thereby achieving a more efficient overall process.

### MICROSTRUCTURE ANALYSIS

### Microstructure Analysis: Vegetable Pomace, Cylindroform Biomaterial, and Micronized Powders

To visualize and analyze the evolution of microstructures, Scanning Electron Microscopy (SEM) was employed for each of the three materials under study: (1) raw vegetable pomace material (skin: interior and exterior; seed: interior and exterior), (2) semi-manufactured, vitreous cilindroform biomaterial (outer surface, inner surface) and (3) final micronized ingredient product (outer surface). This microscopy technique uses electron beams instead of light rays for image creation. It offers a broad depth of field, allowing for a large section of the sample to be focused simultaneously. High-resolution images generated enabled the identification of differential characteristics of each material studied, before and after thermomechanical conversion treatment. Below, the principal findings from the SEM micrograph analysis are summarized and illustrated.

### Microstructure Analysis: Main Findings

In the case of vegetable pomace, the primary vegetal structures constituting its structural support were clearly identified. These structures were numerous and capable of conferring a high level of structural support to the pomace, consequently resulting in a low grinding capability. A process capable of drastically destabilizing these pre-existing support structures is required to transform the vegetable pomace (raw material) into a highly triturable biomaterial

### Microstructure Analysis: Objective of the Study

The study aimed to (1) identify the main internal and external microstructures that provide structural support to vegetable pomaces, i.e., structures preventing collapse while simultaneously hindering grinding; (2) develop an industrial process capable of: -destabilizing these support microstructures, (causing their complete collapse) and -generating a vitreous cylindroform biomaterial amenable for micronization; (3) design, develop, and operate the thermomechanical conversion process capable of collapsing the support structures present in vegetable pomaces, thereby creating a method to create a new biomaterial of multifunctional , vitreous and cylindroform characteristics biomaterial amenable to the subsequent micronization stage; (4) observe how the morphology and microstructures of vegetable pomaces evolve once the support structures have been destabilized and transformed into a new vitreous biomaterial; (5) To observe how does the morphology and microstructures of the cylindroform biomaterial evolve once it has been subjected to micronization. (6) To study the morphology and microstructure of the final product, micronized powder, to better understand its possible applications in different industries.

### Microstructure Analysis: Grape Pomace Skin, External and Internal Surfaces

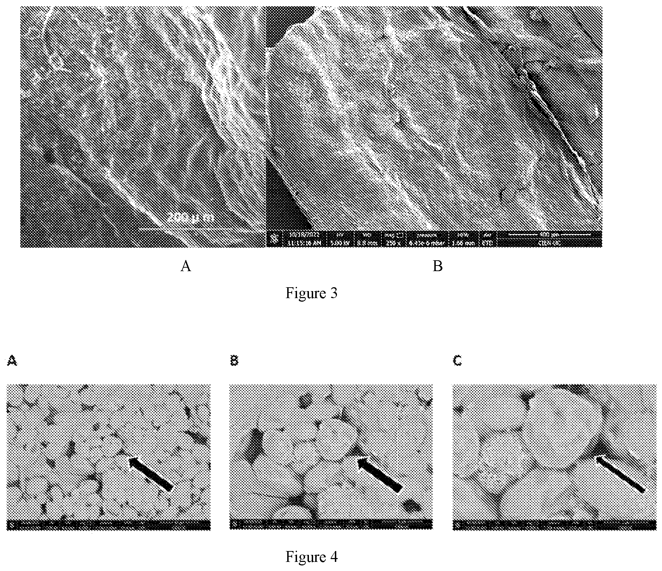

Figure 3 shows micrographs of blueberry skin (3A) and grape pomace skin (3B), both representing the external surfaces of the fruit skins. A homogeneous structure with characteristic folds of such fruits is observed. The orderly and homogeneous structure provides high stability, particularly considering the close relationship between polymeric fibers composed of sugars (cellulose and hemicellulose). In both samples, a homogeneous structure is evident, with clear morphology of the cell wall. The cells constituting this structure are living, elongated in one direction, forming a sheet when viewed from the surface.

Figure 4 presents other characteristic structures of the covering, such as parenchyma cells in palisade, which are non-specialized, isodiametric, thin cells that provide support between tissues and have the capacity to divide. From a parenchymal cell, a new cloned vegetable can be regenerated in vitro. The black arrows with white borders point to a cellular palisade structure of parenchyma at different magnification levels, 8,000X (Figure 4A). At higher magnification, 16,000X (Figure 4B), a parenchymal cell with a transverse cut is seen, serving as support between tissues and preserving polymerized macromolecules (long chains), complicating a grinding process. The ultra-detail of the cell shows its isodiametric, faceted shape with a polyhedral structure (Figure 4C).

The parenchymal cells found in the SEM micrographs of Figure 4 are located beneath the epidermis or the first skin cover and correspond to support and storage tissue. Within the grape pomace skin images, a variety of cellular structures like amyloplasts, which are reserve organelles, were found. These structures, common across many vegetable species, constitute a barrier that impedes the easy degradation of reserve polymers like polysaccharides, oils, proteins, which can be better preserved due to these structures, maintaining the integrity of these macromolecules.

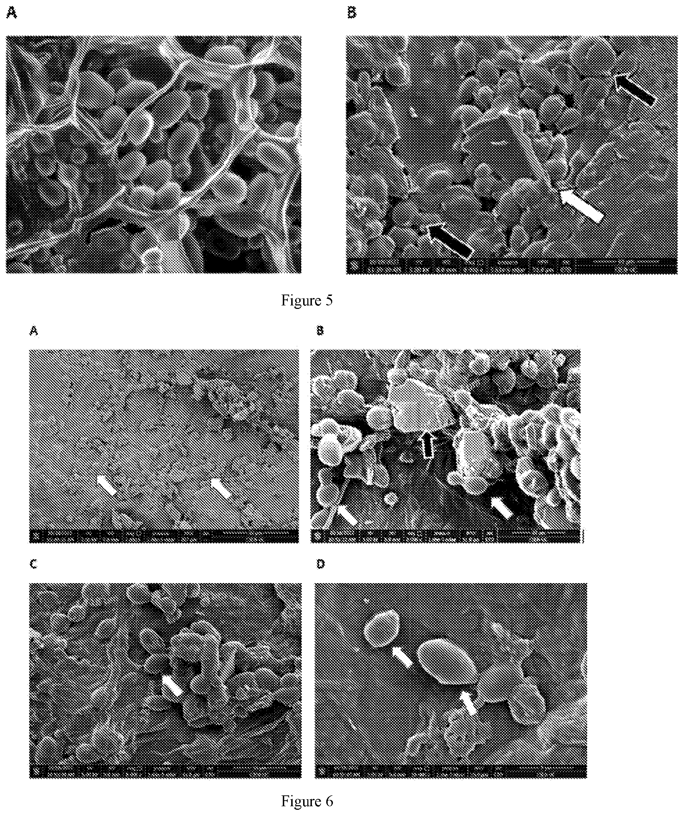

Figure 5A presents a micrograph of a potato cell with an abundance of plastids. In Figure 5B, a micrograph of grape pomace skin magnified 8,000 times shows reserve plastids (black arrows with white borders). An irregular structure is also observed (white arrow with black border), possibly corresponding to the fragmentation of the outer skin surface. The observed ruptures in the skin (white arrow with black border) are attributed to the damage from the pressing and fermentation processes typical in winemaking, where some cracks allowing the release of the pomace are visible. However, complete skin segments in good condition are also present, maintaining the structural stability and making grinding difficult. Similarly, by preserving the skin structure, macromolecules such as lipids and carbohydrates in their polymerized forms (long chains) are also preserved, which may impact any subsequent process of sample triturability unless an innovative process is deviced. The close interaction of these macromolecules can lead to hydrogen bonding interactions, which, though weak, are strengthened due to their abundance when these macromolecules retain their polymeric structure. It has also been determined that polysaccharides, besides binding among themselves, can firmly interact with proteins. These linked macromolecules impart critical characteristics to the skin, such as viscosity and elasticity (viscoelastic properties), and in some cases, can form gelatinous segments, making the material more elastic and much less fracturable, preventing its reduction to smaller particles.

In the internal area of the skin, micrographs reveal a significant accumulation of yeasts (Figure 6), a result of the pomace extraction process from which the sample is taken for analysis. In this substantial presence of yeasts, some mature cells and others in the budding process are observed, along with some crystals of a type of clay present on the skin surface, possibly as part of an agrochemical or insecticide derived from kaolinite.

Figure 6 displays various micrographs of the interior skin surface, where a significant presence of yeasts is clearly visible. White arrows in Figure 6B indicate the structure of some yeasts on the internal side of the skin. The white arrows show yeasts in the budding process, with the size indicated in the micrograph supporting the image conclusions of a yeast size between 3 and 40 µm. A black arrow with white border in Figure 6B shows a part of a clay crystal. Another section of the internal skin with abundant yeasts is seen, where the white arrow points to a type of yeast (Figure 6C). At a higher magnification of 16,000X, the white arrows clearly indicate ovoid structures corresponding to yeasts (Figure 6D).

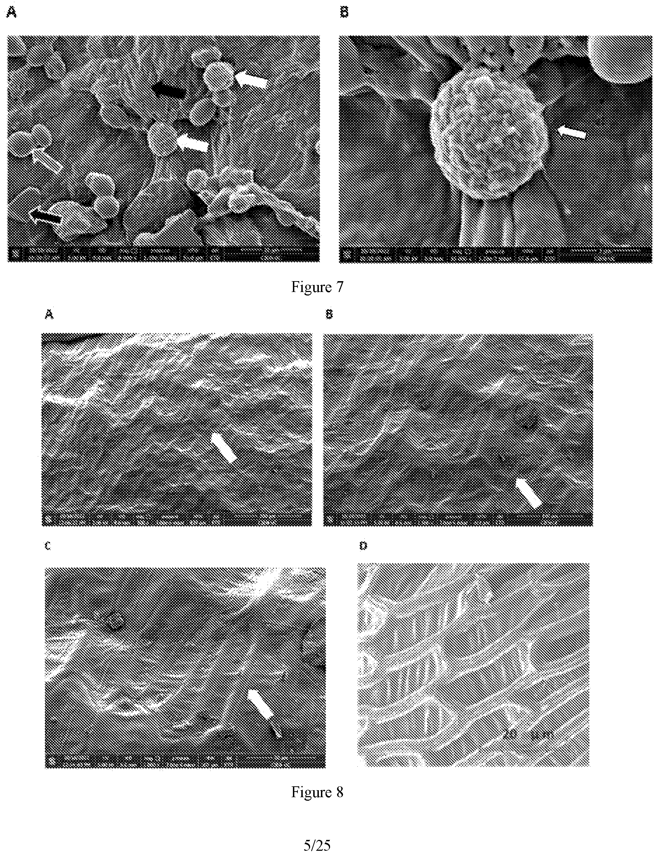

Figure 7 shows micrographs of the internal surface of the skin with detailed cellular nucleus. A set of structures are observed: nucleus (Figure 7A: white arrows), yeasts (Figure 7A: gray arrow with white border), remnants of the cell wall and/or RER (Figure 7A: black arrow), and clay crystals (Figure 7A: black arrow with white border). An enlarged detail of a cell's nucleus (Figure 7B: white arrow with black border) supported by membrane structures is shown (Figure 7B).

### Microstructure Analysis: Structure of the Whole Grape Pomace Seed

Figure 8 displays the external surface of the grape pomace seed. The cellular wall is marked with a honeycomb-like arrangement, characteristic of this type of structure, composed of cellulose and hemicellulose fibers.

On the external surface of the seed, irregularities and cracks are observed, resulting from the dehydration of the samples. Figure 8A clearly shows the "honeycomb" pattern typical of the vegetable cellular wall. The micrograph at 500X magnification reveals many polyhedral edge structures, each containing a vegetable cell (indicated by the white arrow). Figure 8B shows a micrograph at 1,000X magnification of a section of the surface, detailing the polyhedral structure. Figure 8C, at 2,000X magnification, displays the limits of the cellular wall. Figure 8D, a micrograph by Karelovic 2010, illustrates similar cellular structures on the seed surface

### Microstructure Analysis: Structure of a "Half-Cut" Pomace Seed

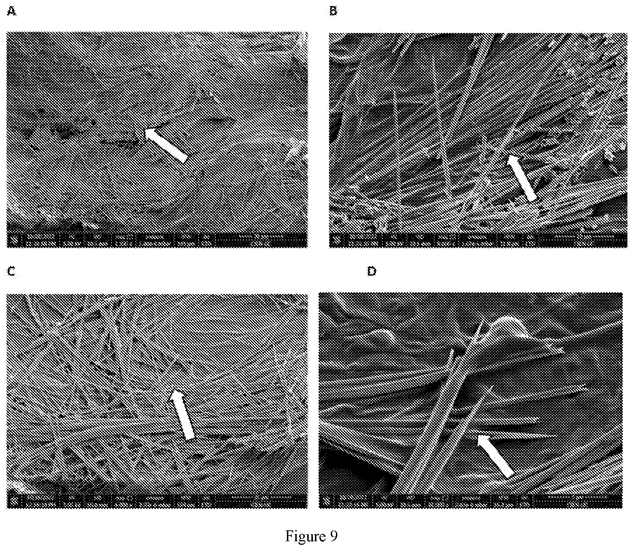

Inside the split seed, a large number of oxalate crystals in the form of raphides are observed. These form in the vegetable when calcium concentrations in the soil are high, due to the presence of other metals or vegetable pathogen attacks, inducing the accumulation of these crystals in the vacuole (Figure 9). These crystals become visible due to mechanical intervention performed on the pomace, leading to water loss and vacuole rupture, as well as mechanical damage to other subcellular components. Grape vegetable cells, in particular, contain a variety of accumulation crystal structures, such as oxalate and tartaric acid crystals. Malate crystals are also commonly found, likely as an innate defense mechanism in vegetables.

Additionally, within the seed, subcellular structures like the nucleus, mitochondria, chloroplasts, rough endoplasmic reticulum, and plastids (chloroplasts, amyloplasts, leucoplasts primarily) are observed in partially dehydrated cells where the vacuole has been lost due to dehydration treatment. Some micrographs show crenated remnants of the vacuole due to dehydration, and empty spaces within the cells due to water loss. Also, small-sized amorphous crystals with a brighter appearance in the micrographs are observed (Figure 9).

Figure 9 presents micrographs detailing different crystals inside the grape pomace seed. Figure 9A's white arrow points to a cluster of oxalate and tartrate crystals. Figure 9B details an oxalate crystal. Figure 9C shows a cluster of crystals derived from malic acid or malate crystals, with the arrow indicating a pair of characteristic crystals. Figure 9D (white arrow) zooms in on these two crystals.

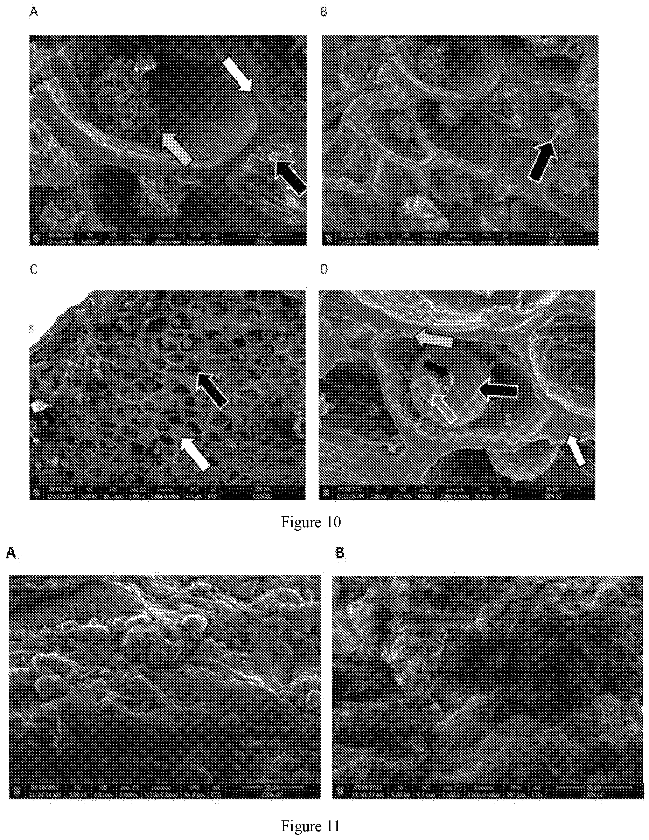

Figure 10 displays various subcellular structures inside the seed. A dehydrated cell maintaining its structure due to the vegetable wall is observed, with no remnants of the membrane visible. In Figure 10A, the white arrow indicates junctions between cellular wall cells (three cells joined), the black arrow with white border points to crystals, possibly oxalate, and the grey arrow with black border shows a cluster of "loose" organelles due to membrane and cytoskeleton loss, predominantly mitochondria and chloroplasts. Figure 10B reveals various remnants of vegetable cells defined by the wall, with the black arrow with white border showing a detail of a crenated vacuole due to water loss. Figure 10C, at a higher magnification, shows "concavities" where functional vegetable cells once existed, with the black arrow with white border displaying a "half-cut" cellular structure due to sample preparation, and the white arrow with black border showing a cell with its cellular wall cover at a plane higher than the cut. Figure 10D details a cell with various substructures or cellular organelles visible; the white arrow indicates the junction of three cells by the cellular wall, the black arrow with white border displays an intact cell nucleus, the grey arrow with white border points to different types of plastids, the grey arrow with black border possibly indicates a cluster of RER, and the black arrow without a border shows amorphous crystals.

As observed in the micrograph of the outer layer of the seed, the ordered polyhedral arrangement is also visible from the inside. This arrangement, as mentioned, is due to the high preservation of resistance structures such as cell wall polymers. From the inside, the "honeycomb" structure is evident. This ordered arrangement creates high resistance, making grinding such preserved structures very difficult. Moreover, it also helps in better preserving reserve organelles like amyloplasts, leucoplasts, or chromoplasts, which accumulate macromolecules like polyphenols, tannins, fatty acids, polysaccharides, etc. These interfere with the grinding process, increasing the adhesion of the fragments to each other. During the fragmentation of the seed in the grinding process, the partial rupture of reserve organelles leads to the release of long-chain fatty acids, which highly interact with each other, resulting in the formation of a viscous paste that is much harder to grind and sieve, or to be partially sieved over an extended period, considering sieve cleaning.

### Microstructure Analysis: Structure of the New Biomaterial, External and Internal Surfaces Structure of the New Biomaterial, External Surface

The structure of the new biomaterial undergoes a radical change compared to the pomace prior to the thermomechanical treatment process. The overall structure appears significantly more disintegrated and more easily fracturable due to its low structural integrity of support (Figure 11). Various non-cohesive domains and numerous stress concentration points are observed, which facilitate a high level of triturability of the samples, vulnerable to mechanical compression due to semi-conserved and heterometric structures.

Figure 11 displays micrographs of the external surface of the new cylindroform biomaterial. Figure 11A shows a structure highly disintegrable under pressure, characterized by low structural integrity support with different planes of subcellular agglomerates. Additionally, various non-cohesive domains are visible, favoring high triturability susceptible to mechanical compression. Figure 11B reveals a semi-conserved, heterometric structure with different depth of field levels, clearly displaying irregular surfaces. Agglomerates of remnants of skin and seed forming a porous and disordered aggregate are also observed.

The fragments observed correspond to agglomerates of pieces of skin and seed, with a porous and disordered arrangement, losing the uniform structure visible in both the skin and seed. This heterogeneous arrangement results from the loss of macromolecule polymers, especially polysaccharides that make up the cell wall, leading to complete destabilization of the characteristic honeycomb arrangement of vegetable cells. This new arrangement is unstable, with protruding protuberances and surface depressions contributing to the generation of countless fracture points.

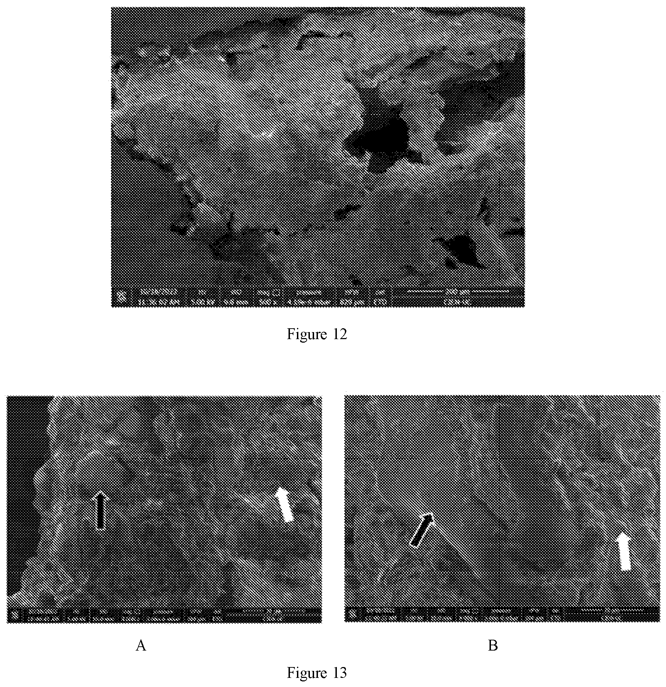

Figure 12 shows various irregularities on the external surface of the biomaterial, which are fracture points subjected to low mechanical pressure. The differences in visible and aggregated structures give a vitreous appearance to the observed sample, resulting in brittleness due to lack of cohesion.

### Structure of the New Biomaterial, Internal Surface

The internal surface of the new cylindroform biomaterial exhibits a structural arrangement similar to the external, with a disordered structure containing granules the size of dehydrated plastids (Figure 13), forming a semi-compact structure with some planar areas resulting from the vitrification of some macromolecules.

Figure 13 presents micrographs of the internal surface of the biomaterial. In Figures 13A and 13B, rough irregular areas susceptible to mechanical compression (white arrows) and more organized vitrified zones (black arrows with white borders) are observed, possibly due to the effect of high temperature and pressure in the formation process that confers vitreous properties, hardness, and rigidity, favoring fracture.

### Microstructure Analysis: Structure of the Micronized Powder

The powder consists of particles with a D90 size under 20 µm, all lacking a defined structure, with various levels of depth of field, showing irregularities on the surface and all visible areas, predicting an easily fragmentable agglomerated structure.

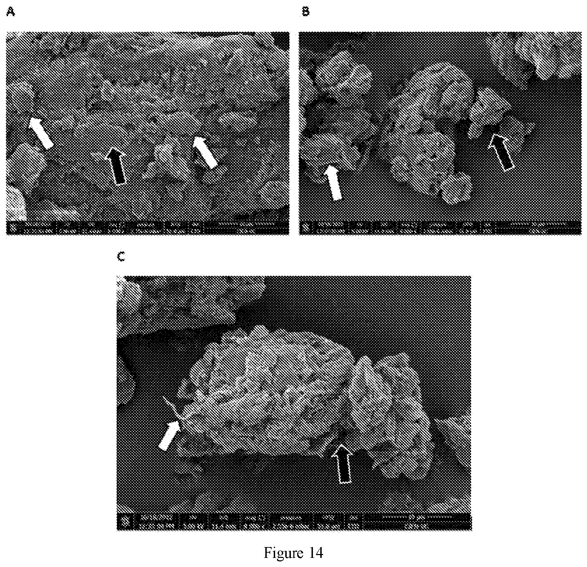

Figure 14 reveals amorphous crystallized agglomerates composed of protein debris with vitreous lamellar and polyhedral characteristics. These are disordered and not in palisade, resulting in a structure of low hardness and without flexibility, making it susceptible to fragmentation. The presence of vitreous structures is more easily discernible in the dispersed powder than in the cylindroform biomaterial, where they often overlap with other structures, but should be present, contributing to the sample's triturability. Figure 14 shows more of these amorphous vitreous crystals in the process of exfoliation, as they are significantly above the particle surface, on the verge of detaching from the powder particle.

Figure 14 displays micrographs of micronized powder particles. Powder particles with many irregularities and agglomerates on their surface are observed, among which amorphous crystals of vitreous structure are present again. The cell wall is completely destabilized, leaving only compressed cellulose fiber fragments (white arrows). In all three images A, B, and C, non-cohesive powder fragments are visible (black arrows with white borders) that can easily "detach" from the structure through exfoliation or simple handling.

### Microstructure Study: Conclusions

Upon observing and comparing the micrographs obtained by scanning electron microscopy of the different samples, the following conclusions can be established:
- In the pomace samples without thermomechanical conversion treatment, characteristic structures of the vegetable cell ultrastructure, such as the cell wall, nucleus, plastids are observable, though organelles like vacuoles are crenated (dehydrated) due to sample treatment.
- The high degree of preservation of polymeric structures in skin and seed impacts the feasibility of grinding the sample, generating stability in structures and consequent difficulty in the grinding process, as it increases the sample's viscosity due to the multiple interactions among polymers (mainly polysaccharides and long-chain fatty acids).
- A substantial difference exists in the ultrastructure of the material after the thermomechanical conversion process, where the physiology of the wall, membrane, and other subcellular components is greatly altered due to the loss of polymerized macromolecule conformation, fragmenting into smaller oligomeric segments incapable of maintaining stable essential structures like the cell wall and membrane.
- Structures partially maintained after the thermomechanical conversion process are smaller, such as storage granules of polyphenols, short-chain lipids, and denatured proteins.
- The appearance of crystals, mainly accumulated in the vacuole, is a strong indicator of the rupture of these organelles, which occupy the largest volume within the cell, hence the appearance of large empty spaces inside them.
- The thermomechanical conversion process partially vitrifies the raw material. These rigid structures, like oxalate crystals, make the sample more susceptible to disintegration. Similarly, the destabilization of macromolecules, reflected in the loss of cellular structures, allows for facilitated fragmentation, as well as the fragmentation of long-chain polymers (polysaccharides and long-chain lipids) which, when present in high quantities, increase the cohesion of the sample, complicating the grinding process.
- It can be asserted that the thermomechanical conversion process modifies the basic cellular structure, generating an alteration that allows for improved triturability of the sample.
- The structure of the new biomaterial undergoes radical changes compared to the pomace prior to the thermomechanical treatment process. The general structure tends to be much more disintegrated and easily fracturable, as it exhibits low structural support integrity (Figure 11). Various non-cohesive domains and numerous stress concentration points are observed, enabling high triturability of the samples, which are susceptible to mechanical compression due to semi-conserved and heterometric structures.

### UNIT OPERATIONS

### THERMOMECHANICAL CONVERSION PROCESS

### Thermomechanical Conversion Process: General Description

The developed process is conducted in a cylindroform reactor containing internal elements of screwlike, spiral, or cylindrical geometry capable of generating pressure, shear, and temperature. These elements drastically alter the initial structure of the vegetable pomace matrix, leading to the release and transformation of bioactive compounds embedded in it. This results in an increased concentration of bioactive compounds in the product of this invention: biomaterial with vitreous characteristics and multifunctional properties. This biomaterial exhibits homogeneity and porosity, making it a brittle material and thus easily pulverizable.

Additionally, to enhance the presence of bioactive compounds in the final product, the micronized multifunctional ingredient, preference is given to using vegetable pomaces with higher concentration of functional value, such as those from grapes, olives, pomegranates, berries, and tomatoes.

Prior to the thermomechanical conversion process, a preconditioning stage of the raw material (vegetable pomace) is required, involving a pre-drying stage at low temperature to prevent degradation of the thermolabile bioactive compounds present. The energy requirement for this pre-drying stage is low, as most of the water to be removed is superficial water.

Subsequently, a two-stage cleaning of the vegetable pomace is performed, first a cleaning by specific weight and then an electromagnetic cleaning to eliminate any foreign bodies that could damage the mechanism of the thermomechanical conversion process.

The thermomechanical conversion (or vitrification) is carried out in a horizontal cylindroform reactor. The raw material (vegetable pomace) enters the reactor through a feed hopper at room temperature. The temperature is then gradually increased using heaters attached to the reactor. The vitrification stage consists of different sub-stages that occur in consecutive zones within the reactor. The first occurs in the feeding zone, where pomace with 15% to 45% moisture is introduced into the reactor via a hopper and is forced to move forward by a conveying system, an auger screw. The auger screw has a specific rotation speed that generates the required feed flow. The pomace then moves to a compression and heating zone, where it is subjected to a combination of mechanical forces (shear and compression) and a thermal process (heating). Heat is generated by electric or steam heaters surrounding the reactor cylinder, as well as by the shear and friction between the mixture and the screw. The temperature and screw speed are variables that must be controlled to ensure adequate gelatinization of the starch and denaturation of the present proteins. In this zone of the reactor, the increase in temperature causes physical and chemical changes in the polysaccharide matrix of the skin and seeds, such as partial solubilization of pectins, hemicelluloses, and celluloses. This increases the viscosity of the mixture and affects the texture and rheological properties of the final product.

The geometry of the reactor and the different screws can restrict the material flow, increasing resistance to movement and compressing the raw material. The material is mixed until a semi-solid plasticized mass is obtained, causing a rapid temperature increase, due to the heat generated by friction. Subsequently, the raw material moves to a mixing and shearing zone, where the mixing speed is increased and it is subjected to greater shearing, facilitating the uniform distribution of the mixture components and the disaggregation of larger particles. The design of the screw in this zone, such as the length and profile of the mixing sections, the screw speed, and the shear, influence the effectiveness of the mixing. In this zone, the skin and seeds present in the mixture are further fragmented, facilitating the release of bioactive compounds and the formation of a more homogeneous matrix. However, strict control of the process variables is required at this stage, as high shear intensity, for example, can cause degradation of heat-sensitive compounds, such as some polyphenols and enzymes.

Occasionally, it is necessary to lubricate the reactor screws to prevent excessive mechanical force.

Finally, the processed mixture enters a die zone, where nozzles determine the shape and size of the product (new biomaterial with vitreous characteristics and multifunctional properties). The cylindroform biomaterial, upon exiting into an atmospheric pressure environment, slightly expands and undergoes a spontaneous drying process that reduces its moisture content. In this zone, pressure and temperature control the expansion and texture of the newly formed cylindroform biomaterial. The expansion induced in the material generates a homogeneous, porous, and aerated structure, contributing to its final texture. The skin and seeds undergo additional expansion and changes in their cellular structure due to the release of water vapor and gases. These changes affect the sensory, nutritional, and functional properties of the cylindroform biomaterial.

The pressure at the reactor's outlet varies within a specific range; if it is below the lower limit, the cylindroform biomaterial will not form, and if it is above the upper limit, the cylindroform biomaterial will form but then be destroyed by overpressure. The reactor has a control point called GAP, corresponding to the space between the screws and the internal exit point. This space must have a specific measurement range. If this range is not met, the pressure will be unstable, and an inconsistent product will be obtained. The residence time of the material inside the reactor also varies within a specific range.

The obtained biomaterial is dried to reduce its moisture content to a level that allows for subsequent grinding (micronization). The homogeneity and porosity characteristics of the biomaterial produced by the reactor facilitate the final drying stage, reducing energy consumption. The obtained biomaterial has vitreous characteristics, multifunctional properties, approximately 5% moisture content, and is homogeneous, porous, and presents stress concentration points, all contributing to its brittleness. These properties facilitate the subsequent micronization stage, where the vegetable matrix is again drastically altered, allowing for the production of ultrafine powders, with an average particle size of less than 74 µm for 100% of the particles, equivalent to a 200 mesh sieve.

The thermomechanical conversion process can operate at an industrial scale, with high processing capacity and productivity. Thus, it can benefit from the global availability of raw materials (vegetable pomaces) and supply large companies in the food, cosmetic, nutraceutical, and pharmaceutical sectors.

### Thermomechanical Conversion Process: Mechanical Components

The following outlines the mechanical components, their key parts and pieces, of a thermomechanical converter and their functions in this process:
- Thermomechanical Converter Barrel: This is the long, hollow tube where most of the thermomechanical conversion process occurs. It is designed to withstand high temperatures and pressures. For wet vegetable pomace, the thermomechanical converter barrel must be equipped with a heating and cooling system to control the temperature during the process.
- Thermomechanical Converter Screw: This is a crucial part of the thermomechanical converter in terms of processing vegetable pomace. It has several sections for feeding, compacting, degassing, and mixing the wet vegetable pomace before the thermomechanical conversion process. It should be designed to handle the fibrous nature and high moisture content of the vegetable pomace.
- Feeding System: This is the mechanism that feeds the vegetable pomace into the barrel of the thermomechanical converter. It must be capable of providing a uniform and consistent feed to ensure stable operation and the quality of the final product.
- Heating System: Controls the temperature inside the barrel of the thermomechanical converter during the process. Wet vegetable pomace requires careful temperature control to ensure effective thermomechanical conversion.
- Degassing System: For wet vegetable pomace, a degassing system is useful to allow for the removal of excess water and volatile gases during the thermomechanical conversion process. This improves the quality of the cylindroform biomaterial and reduces problems during processing.
- Thermomechanical Conversion Die: This is the part of the thermomechanical converter that shapes the thermomechanically converted material. In the case of producing cylindroform biomaterial, the thermomechanical conversion die is designed to produce this biomaterial in the desired size and shape.

### Thermomechanical Conversion Process: Types and Functions of Screws in a Thermomechanical Converter

- Feeding Section: This is the first section of the screw that comes into contact with the vegetable pomace. The design of this section must take into account the fibrous and moist nature of the raw material. The flight grooves in this section are usually deeper to allow for greater feeding capacity. The seeds and skins of the vegetable pomace may require high-torque feeding for efficient processing.
- Compression or Plastification Section: This section of the screw functions to compress and heat the material to bring it to a more malleable state. Vegetable pomace, with its high fiber and moisture content, may require a longer compression section or a barrier screw design to ensure proper compression and heating.
- Degassing Section: This section allows excess water and other volatiles to be expelled from the barrel of the thermomechanical converter before the material is thermomechanically converted. This helps to improve the quality of the vitreous characteristic biomaterial and reduce processing issues.
- Mixing Section: To ensure that the seeds and skins of the vegetable pomace are uniformly mixed before thermomechanical conversion, a mixing section can be included in the screw design.
- Emulsion Section: The emulsion section in a reactor is essential to ensure a homogeneous mix and proper distribution of the food components. In this stage, heat, pressure, and the mechanical agitation of the screws aid in emulsifying the ingredients, i.e., finely dispersing and homogenizing the liquid and solid phases, including fats and water, to form a uniform mixture.
- Dosing and Pumping Section: This section of the screw is responsible for dosing the material and pumping it towards the die of the thermomechanical converter. For vegetable pomace, this section must be designed to handle the high fiber content of the material and produce the cylindroform biomaterial of consistent size and shape.

### Thermomechanical Conversion Process: Flexibility and Versatility of the Thermomechanical Reactor, Adaptability and Customization of the Process for Processing any Type of Vegetable Pomace

The operational flexibility and numerous degrees of freedom afforded by the thermomechanical conversion technology provide a high level of versatility, allowing for the adjustment of its numerous variables to customize the process for treating any type of pomace. Variables such as feed rate, temperature, pressure, and humidity can be modulated to achieve optimal conditions necessary for the thermomechanical conversion of any type of pomace.

### Thermomechanical Conversion Process: Common Vegetable Physiology Characteristics of all Pomaces Allowing Standardization of Processing

The principal compounds present in vegetable pomaces are common to all types of pomaces and can act as natural binding agents during the thermomechanical conversion process, enabling the pomace to adhere and form the cylindroform biomaterial effectively. Pomaces are primarily composed of carbohydrates, water, organic acids, pectins, and lignocellulose. Pectins are long-chain polysaccharides that act as gelling agents in pomace and are a key component in the thermomechanical conversion of vegetable pomaces due to their ability to form gels and their influence on the texture and viscosity of the pomace. Additionally, pectins are also responsible for the structure of the fruit cell wall, affecting the texture and consistency of the pomace. Organic acids, such as citric and malic acid, are also important in the thermomechanical conversion of vegetable pomaces due to their ability to form gels and their effect on the viscosity of the pomace. Organic acids act as gelling agents and also help stabilize the viscosity of the pomace. Starch and fibers also play a critical role in the process. Starch, when exposed to heat and moisture, undergoes gelatinization, a process in which starch granules swell and unravel, forming a three-dimensional matrix that can trap water and other components. This matrix contributes to the structure and stability of the formed biomaterial. Fibers, on the other hand, provide a support structure that helps maintain the integrity of the biomaterial. Thus, although the exact content of these components may vary among different vegetable pomaces, these common components largely allow the standardization of a thermomechanical conversion process for treating vegetable pomaces in general.

### Thermomechanical Conversion Process: Thermomechanical Conversion Reactor Diagram

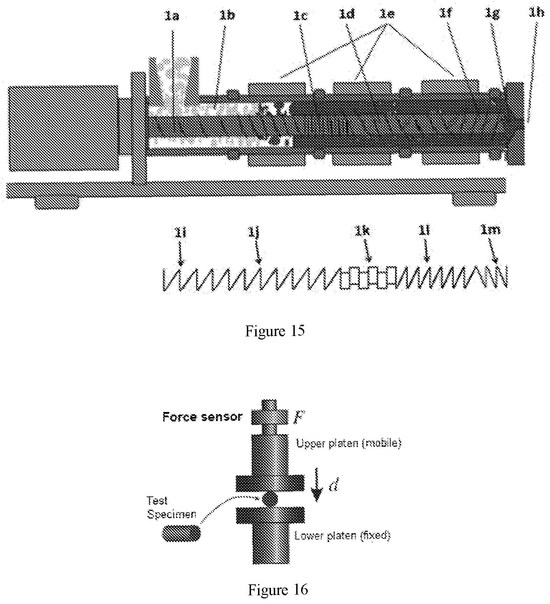

Figure 15 shows the configuration of components of a thermomechanical conversion reactor and the screw configuration required for the production of the new cylindroform biomaterial (intermediate process product) from the thermomechanical conversion of vegetable pomace.

The details are as follows:
1a: Trapezoidal Screw
1b: Controlled Advance Screw
1c: Shear and Kneading
1d: Controlled Advance Screw
1e: Temperature Induction
1f: Controlled Pressure
1g: GAP
1h: Exit
1i: Trapezoidal Screw
1j: Controlled Advance Screw
1k: Shear and Kneading
1l: Controlled Advance Screw
1m: Controlled Pressure

### Thermomechanical Conversion Process: Operating Ranges of the Main Variables in the Thermomechanical Conversion Process

The operating ranges of the main operational variables of the thermomechanical conversion process that allow for obtaining a biomaterial with vitreous characteristics and multifunctional properties, and high efficiency in the micronization process, are shown below in Table 1.

**Table 1**

| PROCESS VARIABLE | OPERATING RANGES |
|---|---|
| Feed Hopper Level | 10 - 100 Kg |
| Raw material feeding speed | 1 - 8 Kg/min |
| Input material moisture | 15 - 37% |
| Flow (kg/h of production) | 60 - 480 Kg/h |
| Water injection | 100 - 750 ml/min |
| Vegetable oil injection | 36 - 300 ml/min |
| Working amperage | 40 - 105 A |
| Working frequency | 34 - 50 Hz |
| Working torque | 88 - 127 Nm |
| Work pressure | 25 - 45 bar |
| Air GAP | 4 - 12 mm |
| L/D relation | 12 - 16 mm |
| Process temperature induction | 120 - 190 °C |
| Shear and kneading type | Single/double |
| Screw speed | 231 - 340 rpm |
| Matrix output (No. of perforations) | 2-12 |
| Insert diameter (exit perforations) | 3 - 4 mm |
| Shear speed | 260 - 430 rpm |
| Moisture of exit material | 8 - 24 % |

### MICRONIZATION PROCESS - ACM (AIR CLASSIFIER MILL)

### Unit Operations ACM Micronization: Brief Description of the ACM Micronization Process

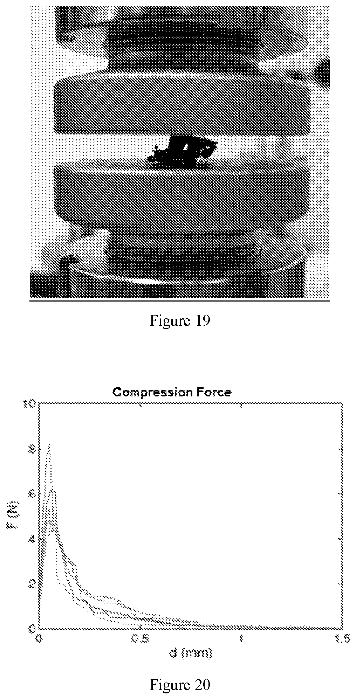

The cylindroform biomaterial produced from vegetable pomaces exhibits physical properties classifying it as a material with vitreous characteristics. This classification has been determined through qualitative and quantitative evaluation of its mechanical, physical, and physicochemical properties, such as homogeneity, porosity, traction and compressive strength, bulk grinding, and brittleness. These properties are important to study, as they provide information on the degree of triturability of the biomaterial. The high degree of triturability of the produced biomaterial allows for the substitution of the traditional hammer grinding stage with an air classifier mill (ACM) micronization stage, enabling the production of ultrafine powders. Figure 19 shows a diagram of an ACM micronization equipment.

In the ACM micronization process, particle size is reduced through a combination of impact and cutting. The material is pneumatically fed into the ACM mill and then propelled by air through a rotor equipped with hammers and blades. The hammers impact the particles, sending them against the mill linings where they fragment upon impact and rebound towards the hammer and blade zone. The blades rotate at high speed, striking the particles and cutting them into smaller sizes. As the particles are ground, the air carries them towards the classifier that separates particles of different sizes and directs them into different air streams. Larger particles are returned to the rotor for further grinding, while finer particles are separated and collected in a collector. This grinding produces a powder with low granulometry that possesses properties such as increased specific surface area, enhanced solubility, and dispersibility. To achieve the required particle size, it is necessary to adjust and control the main process variables:
1. Rotor Speed: Affects the impact energy applied to particles during grinding and, therefore, influences the efficiency of the process and the particle size obtained.
2. Classifier Speed: Determines the cut-off particle size and, consequently, the granulometry of the final product.
3. Airflow Rate: Impacts particle classification, temperature control, and process efficiency. Too low an airflow can cause inadequate classification and heat build-up, while too high an airflow can lead to excessive energy loss and affect process efficiency. The optimal airflow depends on the type of biomass and desired particle size.
4. Raw Material Feed: Influences grinding efficiency and temperature control. Too low a material load in the grinding chamber can result in inefficient grinding and a very short residence time, while too high a load can generate excessive heat and particle build-up in the grinding chamber. The optimal material load varies depending on the type of biomass and equipment used.
5. Material Moisture: Although the moisture content of the cylindroform biomaterial feed is approximately 5%, it is important to control and maintain this value throughout the micronization process to ensure optimal performance and avoid changes in the final product properties.
6. Mill Grid Openings Size: The configuration of the mill grid, including the size and shape of the openings, influences the particle size and efficiency of the process.
7. Cooling Air Temperature: Affects the process's ability to dissipate heat generated during grinding, which is very important to avoid thermal degradation of the vegetable biomass and ensure product quality. The optimal cooling air temperature depends on the type of biomass and equipment used.

Micronization improves the sensory properties and increases the specific surface area of the final product (micronized ingredient with multifunctional properties), thereby increasing the dissolution rate and bioavailability of bioactive compounds in the body when consumed. The production of micronized powder would not be possible without the provision of a biomaterial with vitreous characteristics.

### ACM Micronization Process: Production of Micronized Ingredients and Applications in Various Industries

The micronization of cylindroform biomaterial obtained from the thermomechanical process developed for vegetable pomaces endows the micronized ingredient with numerous properties that enhance its use in the food, cosmetic, nutraceutical, and pharmaceutical industries.

Production of Micronized Ingredients for the Food Industry Micronized ingredients possess and confer numerous properties to the food matrices in which they are incorporated.
- Stability and Dispersion: Micronized powder ingredients tend to disperse better in various food matrices, improving the stability of the final products.
- Increased Bioavailability of Bioactive Compounds: Particle size reduction enhances the release and bioavailability of bioactive compounds present in the biomaterial, increasing their effectiveness in the final food product.
- Enhanced Free Radical Scavenging Capacity: Due to their higher antioxidant content, they increase the capacity to capture and neutralize free radicals.
- Increased Lipid Oxidation Inhibition Capability: Micronized ingredients can have a greater ability to prevent lipid oxidation in foods due to their higher antioxidant content.
- Improved Encapsulation Capability: Micronized ingredients can encapsulate and protect sensitive compounds, such as vitamins or essential oils, enhancing their stability and controlled release in the final product.
- Reduced Water Activity: Micronized ingredients have lower water activity, which can prolong the shelf life of products and reduce microbial growth.
- Reduced Sedimentation: Micronized ingredients tend to settle less in liquid products, improving the homogeneity and stability of the formulation.
- Enhanced Flavor and Aroma Dispersion: Micronized ingredients have a greater capacity to disperse flavors and aromas in food matrices, intensifying and improving the consumer sensory experience.
- Reduced Lump Formation: Micronized ingredients can reduce the formation of lumps in food matrices, improving the smoothness and texture of the final product.
- Enriched Foods: The micronized multifunctional ingredient can be used as an ingredient in foods to enrich them with nutrients and bioactive compounds, such as dietary fiber, antioxidants, vitamins, and minerals. It can be added to products like pastas, breads, cereals, cookies, and granola bars to enhance their nutritional and functional value.
- Powdered Foods, Beverages, and Dairy Products: Due to its increased solubility and dispersion capability, the micronized multifunctional ingredient can be used in the production of powdered products, instant beverages, and dairy products, such as protein shakes, powdered soups, cultured milk, yogurt, ice creams, and drink mixes.

### ACM Micronization Process: Production of Micronized Ingredients for the Cosmetic Industry

The use of multifunctional ultrafine particle-sized ingredients, derived from the micronization of the cylindroform biomaterial with vitreous characteristics obtained from vegetable pomaces, has vast applicability in the cosmetic industry thanks to their functional properties and richness in bioactive compounds. These compounds, which include antioxidants, vitamins, and minerals, have notably positive effects on skin and hair health. Micronization, leading to ultrafine particle size, facilitates greater penetration and absorption of these bioactive compounds into the skin, which is crucial for maximizing their efficacy. The fine texture of the resulting powder also imparts a smooth and pleasant feel, a highly valued characteristic in cosmetic products. Additionally, the presence of antioxidants in this biomaterial helps combat oxidative stress, one of the primary causes of premature skin aging. Antioxidants neutralize free radicals and aid in the repair and regeneration of skin cells. On the other hand, the vitamins and minerals in this biomaterial can provide essential nutrition for the skin and hair, thus promoting their health and vitality. For instance, the presence of vitamin E, known for its moisturizing and anti-inflammatory properties, can be particularly beneficial. This multifunctional ingredient, with its unique composition and ultrafine particle size, emerges as a valuable active that can be incorporated into a variety of cosmetic formulations such as creams, lotions, serums, shampoos, and conditioners, expanding the range of products that can benefit from its properties.

### ACM Micronization Process: Production of Micronized Ingredients for the Nutraceutical Industry

The micronized multifunctional ingredient, enriched with a high concentration of polyphenols, also resonates in the nutraceutical industry, thanks to its numerous bioactive compounds and essential nutrients. The nutraceutical sphere is oriented towards products that amalgamate the nutritional virtues of foods with the therapeutic properties of medicines, providing functional and therapeutic effects in the prevention and management of various conditions and disorders. For example, this domain includes dietary supplements, weight control products due to their generous contribution of dietary fiber, and more. The micronization process, which yields this multifunctional ingredient, ensures high availability and bioavailability of polyphenols and other bioactive compounds, optimizing their absorption and utility in the body. These polyphenols are linked with antioxidant, anti-inflammatory, and cardioprotective properties, which can significantly contribute to mitigating risk factors associated with chronic diseases like cardiovascular diseases and cancer. Additionally, the nutritional content of the micronized ingredient can be instrumental in addressing dietary deficiencies, promoting a state of overall well-being and health. It is plausible to include this ingredient in a variety of nutraceutical formulations like capsules, powders, or functional beverages, thus expanding the possibilities for developing new products that respond to the growing consumer demand for natural and effective health-promoting alternatives.

### ACM Micronization Process: Production of Micronized Ingredients for the Pharmaceutical Industry

The production of micronized powders holds significant value for the pharmaceutical industry, mainly as raw material in the selective extraction of various families of polyphenols. Using techniques like ultrasound-assisted leaching, it is feasible to break down the remaining vegetable matrices, thereby releasing the polyphenols encapsulated in these structures into the leaching solution. The distinctive feature of micronized powders lies in their reduced particle size, translating into a broad specific surface area that significantly accelerates the kinetics of the polyphenol release process. Following the leaching stage, separation methods like chromatography, fluidized bed ion exchange, or other selective separation techniques are employed, thus enabling the efficient segregation of polyphenols present in the leached solution. These polyphenols, once isolated, can be leveraged by the pharmaceutical industry in formulating treatments targeted at a variety of disorders or diseases, due to the specific properties inherent to each family of polyphenols. Additionally, the direct administration of the micronized powders, given their high concentration of bioactive compounds, emerges as a promising strategy in the management of serious medical conditions like Epidermolysis Bullosa (commonly known as crystal skin), and other severe skin disorders. The direct intake of micronized powders due to their high concentration has potential use in diseases like crystal skin and other serious skin disorders. This mode of utilization underscores the therapeutic potential of the polyphenols contained in the micronized powders, and opens a horizon for research and development in creating new pharmaceutical formulations that can substantially contribute to the improvement of the quality of life of affected patients. The described framework underscores the importance of technological advancements in the production and processing of micronized ingredients, and their impact on expanding the therapeutic arsenal available for addressing diseases and disorders of various natures. This intersection between micronization technology and pharmacology offers a fruitful path towards pharmaceutical innovation grounded in the optimal utilization of natural resources.

### MECHANICAL ANALYSIS OF THE VITREOUS CYLINDROFORM BIOMATERIAL Mechanical Analysis Vitreous Biomaterial: Diametral Compression Test

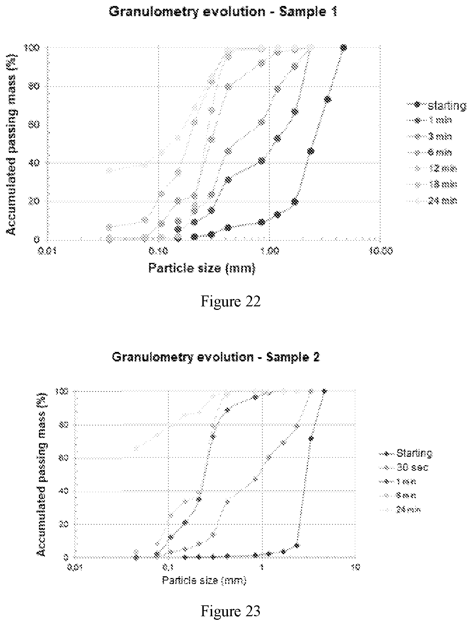

The traction strength was determined through a diametral compression test (SCS, Side Crushing Strength) on the cylindroform biomaterial obtained from the thermomechanical conversion of grape pomace. This test involves subjecting a cylindroform specimen to compression along one of its diameters at a constant speed (Figure 22).

For the diametral compression tests of the biomaterial, an Instron 3365 traction/compression machine was used, equipped with a 2.5 kN load cell and two 56 mm diameter compression platens. The sample is placed in the center of the lower platen. The test proceeds at a lowering speed of the upper platen of 1 mm/min. The machine records the position d of the crosshead and the compressive force F at a frequency of 100 samples per second.

The dimensions of the cylindroform material used were D = 4.8mm and 6.3mm < h < 12.5mm. It is important to note that, although it is a compression test, it is used to infer traction strength (assuming that the micro-fissure of the cylindroform biomaterial occurs along the line that joins the points where the biomaterial specimen is compressed) through the following expression: ${σ}_{f} = \frac{2 {F}_{f}}{πDh}$ where:
σ_{f}: represents the final traction strength, in units of force per unit area.
Ff or fmax: represents the maximum force at the moment of maximum force drop.
D: the diameter of the cylindroform biomaterial, and h: the height of the cylindroform biomaterial.

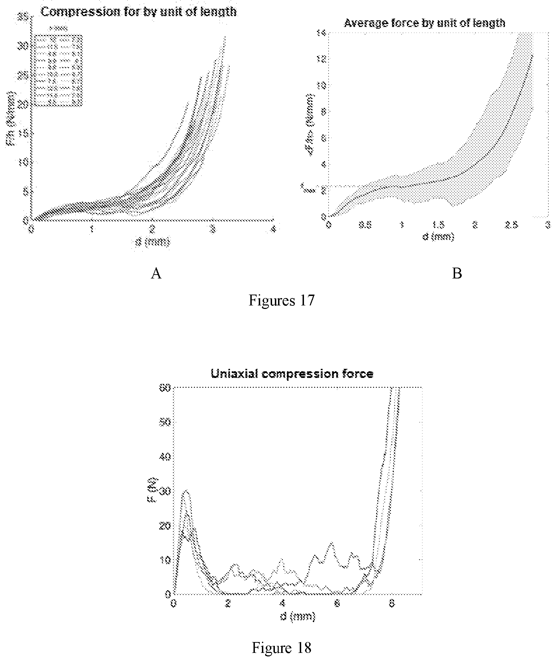

Figure 17 presents the compression force vs. displacement curves for the 20 tests conducted.

In Figure 17A, the Longitudinal Compression Force (per unit length) vs. (displacement) is represented, corresponding to the tests (force vs distance) of 20 specimens. To estimate the resistance of the cylindroform biomaterial, the average longitudinal force was calculated for the 20 specimens. In all cases, compression was performed at a constant speed of 1 mm/min and automatically stopped when the force reached 200N.

Figure 17B shows the envelope of the 20 curves from Figure 23A, with the average curve in red. Three successive behaviors can be interpreted: i) response resulting from the resistance offered by the cylindroform biomaterial to deformation in an elastic, plastic, or viscous manner; ii) formation of fractures reducing the compressive resistance of the cylindroform biomaterial; iii) a "granular" regime where the significantly fragmented cylindroform biomaterial behaves like a "pancake" that flattens and generates a substantial increase in force for distances greater than 2 mm.

The mechanical behavior of the biomaterial inferred from an SCS type compression test indicates that the cylindroform biomaterial exhibits quasy-brittle behavior, as opposed to the abrupt fracture observed in brittle materials, where the specimen breaks into two. On the contrary, the obtained force curves show several successive drops, probably associated with small-scale fracture events. The average calculated in Figure 17B dilutes these events, leaving a curve that shows a monotonic increase in force with a plateau that serves to define an operational value of traction strength.

In Graph 17B, the force per unit length (f = F/h), averaged for all SCS tests, is shown The inflection point
of the curve fmax/h = 22984 N/mm, allows defining the final traction strength for the SCS test, as: ${σ}_{f} = \frac{2 {F}_{f}}{πDh}$ obtaining fmax/h = 22984 N/mm → *σ_{f} =* 305 kPaMechanical Analysis of the Vitreous Cylindroform Mechanical Analysis Vitreous Biomaterial: Uniaxial Compression Test (CU)

Figure 18 represents the F vs. d graphs of five uniaxial compression tests. In all cases, compression was performed at a constant speed of 1 mm/min, and the test automatically stopped when the force reached 200 N. It should be noted that the force is represented in a range lower than the maximum reached during the test to appreciate what happens in the area of interest. A sequence of three behaviors can be interpreted: i) a response resulting from the resistance offered by the biomaterial to deformation in a plastic, elastic, or viscous manner (due to the presence of fluid); ii) the formation of fractures or other types of localized defects reducing the compressive resistance of the cylindroform biomaterial; buckling and fracture effects may also occur; iii) a "granular" regime where the significantly fragmented cylindroform biomaterial behaves like a "pancake" that flattens and widens increasingly.

Figure 19 shows the cylindroform biomaterial in regime (ii). The cylindroform biomaterial has a splintered appearance, evidence of successive micro-fissure events and possibly buckling followed by fracture. Compared to the SCS tests, the CU tests, although conducted with fewer repetitions, indicate a relatively more brittle behavior due to the existence of a first micro-fissure event characterized by a much more pronounced drop than in some of the SCS tests. From the results of the five tests, it is possible to calculate the compressive strength by determining the maximum force reached between regimes (i) and (ii) for each test.

This test is based on the ASTM D4179-22 standard and is used to determine the compressive strength of a material. Brittle materials like concrete usually fail by axial rupture, shear, or buckling (in the case of long specimens). Therefore, this test applied to the cylindroform biomaterial can provide information about its brittleness. The CU test, unlike the SCS test, does not allow for the inference of traction strength.

Figure 18 represents the F vs. d graph of the five uniaxial compression tests conducted. In all tests, compression was performed at a constant speed of 1 mm/min, and the test automatically stopped when the force reached 200 N. It should be noted that the force is represented in a range lower than the maximum reached during the test to appreciate what happens in the area of interest.

Compared to the SCS tests reported in the first report, the CU tests, although conducted with fewer repetitions, indicate a relatively more brittle behavior, due to the existence of a first micro-fissure event characterized by a much more pronounced drop than in some of the SCS tests. From the results of the five tests, it is possible to determine a measure of compressive strength or hardness by determining the maximum force reached between regimes (i) and (ii) for each test.

The average maximum resistance obtained is <Fmax> = (25.0 ± 4.9) N.

From this result, the compressive strength is determined as $\left〈{σ}_{c}\right〉 = \frac{4 \left〈{F}_{max}\right〉}{{πD}^{2}}$

Which gives a value of < σc >= (1.40 ± 0.27) kPa (considering D = (4.8 ±0.1) mm).

### Mechanical Analysis Vitreous Biomaterial: Uniaxial Traction Test (TU)

Figure 20 displays the results of 5 uniaxial traction tests (TU). A continuous increase in force to a maximum value followed by a pronounced drop until the cylindroform biomaterial splits into two is observed. This behavior indicates a quasi-brittle nature in tension. From Figure 20, it is evident that the traction force is more reproducible than the compressive force in CU tests. The drop, while not as abrupt, is more pronounced than the similar drop observed in CU tests and occurs earlier. The subsequent monotonic fall can be interpreted as the result of a series of minor rupture events, in which, unlike he compression tests where the cylindroform biomaterial is increasingly confined between the compression platens, now, as the extension progresses, the cylindroform biomaterial can only break further. The sequence of two behaviors can be interpreted as: i) a response resulting from the resistance offered by the cylindroform biomaterial to deformation in an elastic, plastic, or viscous manner; ii) the formation of a significant micro-fissure after which the traction response only decreases monotonically until the cylindroform biomaterial splits into two. In all tests, compression was performed at a constant speed of 1 mm/min and manually stopped. The observed behavior indicates a quasi-brittle nature in tension.

From the results of the five tests, a measure of traction strength can be obtained by determining the maximum force < Fmax > for each test.

The average over the 5 tests yields a value, < Fmax >= (5.9 ± 1.3) N.

From this value, the traction strength is determined as: $\left〈{σ}_{t}\right〉 = \frac{4 \left〈{F}_{max}\right〉}{{πD}^{2}}$

Which gives a value of < σt >= (330 ± 9) kPa. This value is very close, within 6%, of that measured in the SCS test.

### Mechanical Analysis Vitreous Biomaterial: Comparative Bulk Compression Test

### Dry Grape Pomace vs. New Cylindroform Biomaterial

The objective of these tests is to compare the degree of triturability of grape pomace to that of the biomaterial obtained from the thermomechanical conversion. This test is based on the ASTM D7084-18 standard (Standard Test Method for Determination of Bulk Crush Strength of Catalysts and Catalyst Carriers).

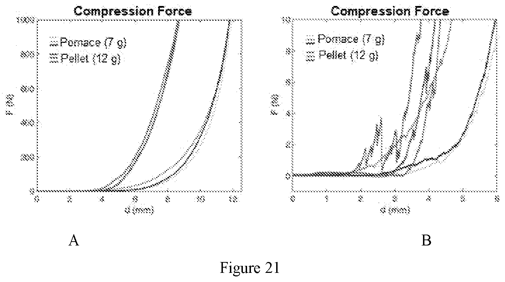

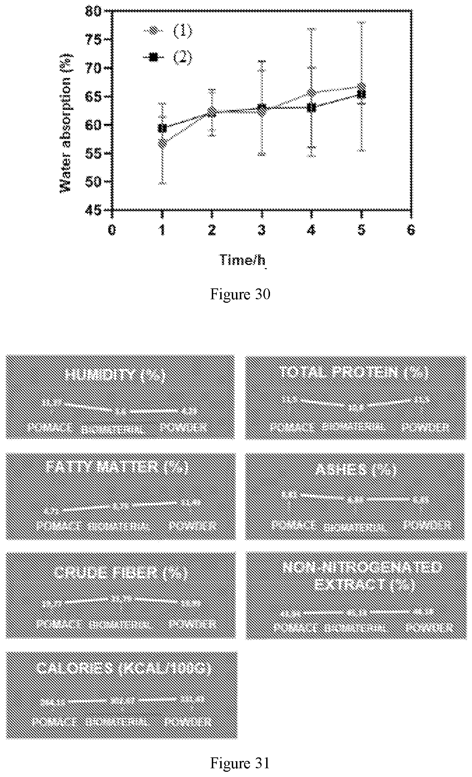

In Figures 21A and B, the responses F vs. d of the compression tests performed on equal volumes of cylindroform biomaterial and pomace are represented on the same graph. It can be observed that the compression force of the biomaterial is much greater than that of the pomace at the same compression distance. The curves of each material are clearly distinguishable. In Figure 31B, the force scale (ordinate axis) is reduced to better show the force fluctuations in greater detail.

The bulk compression tests indicate a brittle behavior of the biomaterial, entirely absent in the grape pomace. The greater amplitude of the force fluctuations in the compression of the biomaterial indicates fracture events characteristic of a material that breaks in a brittle manner. For the pomace, a monotonic increase in the compression force is observed, even at small forces (Figure 21B), with small force fluctuations attributable to relative displacements and deformations of the constituent particles of the pomace (skin, seeds, fibers). In the cylindroform biomaterial, the force fluctuations, up to a deformation of approximately 12%, resemble the same fluctuations observed in the CU tests of the individual cylindroform biomaterial. In fact, their characteristic amplitude is of the same order of magnitude (1 N) as those suffered by the individual cylindroform biomaterial in uniaxial compression (CU) tests. The bulk compression tests indicate a brittle behavior of the biomaterial, entirely absent in the grape pomace. The greater amplitude of the force fluctuations in the compression of the biomaterial indicates fracture events characteristic of a material that breaks in a brittle manner. When compressing several units of the cylindroform biomaterial at the same time, these events correspond to fractures of several individual units of the cylindroform biomaterial, due to mutual contacts.

### Mechanical Analysis Vitreous Biomaterial: Conclusions

In conclusion, the mechanical behavior of the cylindroform biomaterial has vitreous characteristics, inferred from the SCS type compression test indicating that this biomaterial exhibits a quasy-brittle behavior. The diametral compression, uniaxial compression, and traction tests allow us to conclude that the mechanical behavior of the biomaterial obtained from grape pomace presents different degrees of brittleness, depending on the type of load. This biomaterial is more brittle in tension than in uniaxial compression, while it is less brittle in diametral compression than in uniaxial compression. This indicates a material with complex mechanical characteristics and quasi-brittle behavior.

In BCS grinding conditions, this biomaterial is subjected to mixed loads, where pressure and cutting loads should be predominantly prevalent. In this test, the biomaterial exhibits quasy-brittle behavior. In conclusion, the micro-fissure of the cylindroform biomaterial is quasy-brittle, complex, gradual, with multiple fractures and internal friction.

### Mechanical Analysis Vitreous Biomaterial: Comparative Triturability Test

### Dry Grape Pomace vs. Biomaterial

This analysis corresponds to a comparative triturability test of two materials obtained from grape pomace. The first (Sample 1) corresponds to dehydrated grape pomace (5% moisture), while the second (Sample 2) corresponds to the biomaterial of the present invention.

### Evolution of the Granulometry of the Samples:

Figure 22 shows how the granulometry of sample 1 changes as the pulverization time increases from 1 min to 24 min. P80 and P50 indicators are used, which correspond to the particle size at which 80% and 50% of the mass is below this size. It is observed that the granulometry decreases from a P80 of 3.69 mm to 290 µm in 24 minutes of grinding. This grinding time corresponds to 0.88 kWh.

Figure 23 shows how the granulometry of sample 2 changes as the pulverization time increases from 0.5 min to 24 min. It is observed that the granulometry decreases from a P80 of 3.76 mm to 110 µm in 24 minutes of grinding. This grinding time corresponds to 0.88 kWh.

Furthermore, the results show that the main size reduction in sample 2 occurs in the first minute of grinding, where the sample is reduced to 360 µm, and then in the remaining 23 minutes, the size only decreases to 110 µm.

Difficulties were observed in the classification and sieving process in the case of sample 1 (dehydrated grape pomace), as fatty acids from the seeds are released during the grinding process, hindering the passage of particles through the sieve.

The results indicate that there is a considerable change in grinding behavior associated with the processing of grape pomace.

Since the same grinding times were applied to both samples, implying identical energy input, the sample of the new biomaterial of the present invention proved much more efficient in terms of industrial productivity, energy consumption to reduce the size of this biomaterial, and therefore, associated operational costs.

### Mechanical Analysis Vitreous Biomaterial: Conclusions of Comparative Triturability Test

The results indicate that the vitreous biomaterial obtained by the thermomechanical conversion of grape pomace (Sample 2) has a considerably different behavior from dehydrated grape pomace (Sample 1). A twenty-fold greater size reduction is observed in the case of Sample 2 when using the same energy and ball charge with both samples. This result implies significant energy savings and a substantial increase in productivity in the grinding process when the material is in the form of vitreous biomaterial. Additionally, the results obtained in this study make the industrial processing of the cylindroform biomaterial of the invention technically and economically viable, as a high-value-added product is obtained, with the technological attributes desired by the industry, through a highly productive, simple, and low-energy-cost manufacturing process, allowing the treatment of large volumes of agro-industrial waste.

In summary, there is an approximately twenty-fold increase in the productivity of the micronized powder production process, and an approximately twenty-fold decrease in energy consumption.

### PSHYSIOLOGICAL ANALYSIS

### Physiological analysis: Comparative Physiological Analysis

Grape Pomace, New Vitreous Biomaterial, and Micronized Multifunctional Ingredient Morphology and Topography Images of the three types of materials were obtained using high-resolution scanning electron microscopy (FE-SEM) at electron voltages of 2 and 5 kV.

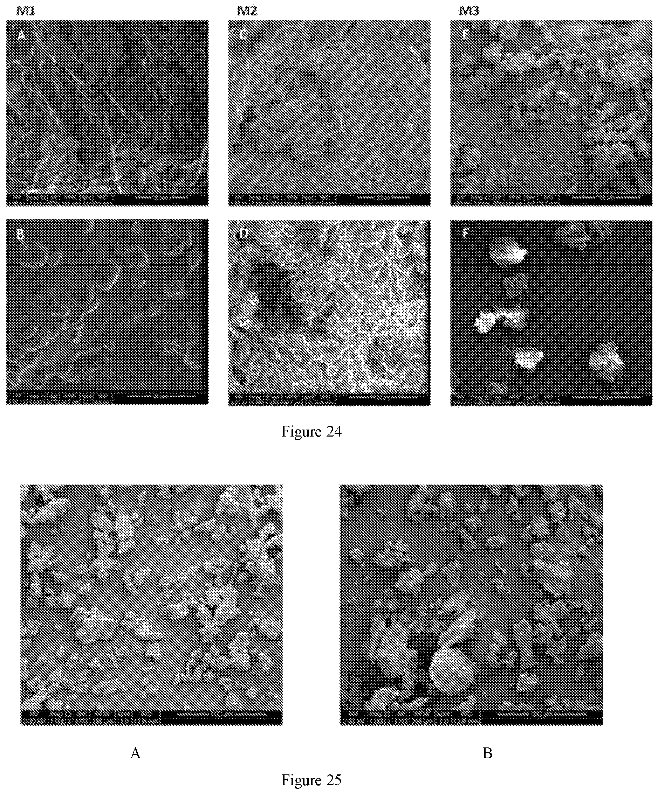

From the observation and comparison of the micrographs obtained from the samples of grape pomace, new vitreous biomaterial, and micronized multifunctional ingredient, it is noticeable that at low magnifications, there is a smooth surface with spheroidal forms on the surface (Figure 24 A), which changes when transitioning to the biomaterial, where a rough surface is observed (Figure 24 C), appearing more compacted compared to Figure 24A. This topographic difference is maintained in the higher magnification micrographs (Figure 24 B and D) where the change in roughness is evident. It is important to note that in the grape pomace sample, grape seeds were also found, which are not present in Sample 2 (biomaterial) and Sample 3 (micronized ingredient).

Finally, in the right column, corresponding to Sample 3 (figure 24, E and F), which shows particles obtained from the micronization of the biomaterial (Sample 2), amorphous particles maintaining the rough topography of Sample 2 can be observed, being conglomerated particles. This indicates that the process used to process the pomace has enabled the production of particles with a micrometric size.

### Physiological analysis: Size Distribution by Scanning Electron Microscopy

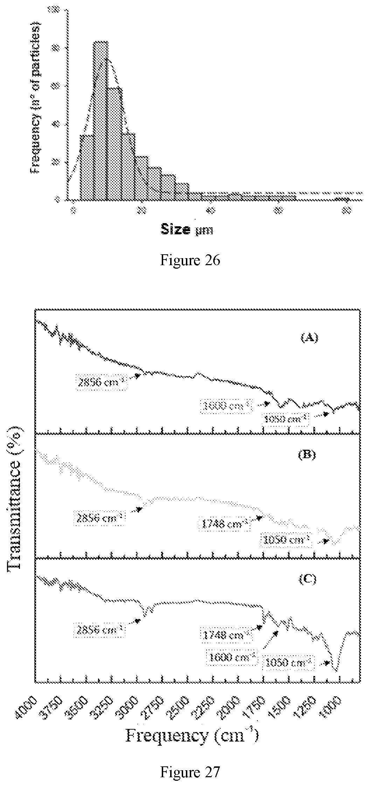

To determine the size of the particles observed in Figures 25A and 25B, 273 particles per sample from 5 micrographs of different areas of the sample were measured. A statistical analysis was performed with a histogram of size distribution (Figure 26). This analysis confirms with 95% confidence that 50% of the particles are between 8 - 19 µm (Table 2) and that 91% of the measured particles do not exceed 30 µm.

Table 2 The ultrafine granulometry of the functional ingredient is a consequence of the high triturability of the vitreous biomaterial, making the industrial process technically and economically viable and generating a high degree of applicability of the micronized powder in different industries such as food, cosmetics, nutraceuticals, and pharmaceuticals.

| Size (µm) | Number of Particles | Particles % |
|---|---|---|
| 5-10 | 97 | 36 |
| 10-20 | 110 | 40 |
| 20-30 | 40 | 15 |
| 30-40 | 11 | 4 |
| 40-50 | 6 | 2 |
| 50-100 | 9 | 3 |
| Total | 273 | 100 |

### PHYSICO-CHEMICAL ANALYSIS

### Physico-Chemical Analysis: Grape Pomace, Cylindroform Vitreous Biomaterial, and Micronized Ingredient

To determine the effect of the thermomechanical conversion treatment on the structural alteration of binding compounds present in grape pomace to generate a biomaterial with brittle characteristics (necessary property to achieve a high degree of triturability), the physicochemical characterization of the 3 materials was carried out: grape pomace, biomaterial, and micronized powder ingredient. This characterization was based on Attenuated Total Reflectance Fourier Transform Infrared Spectroscopy Physico-chemical analysis: (ATR-FTIR) and Ultraviolet-Visible Spectroscopy (UV-vis).

To determine the high porosity of the new cylindroform vitreous biomaterial compared to untreated grape pomace, a contact angle analysis (Sessile Drop), a Liquid Displacement analysis (Salehi et al., 2015), and Solubilization tests in a Polarity Gradient were performed, techniques used to measure this characteristic.

### Physico-Chemical Analysis: Attenuated Total Reflectance Fourier Transform Infrared Spectroscopy (ATR-FTIR)

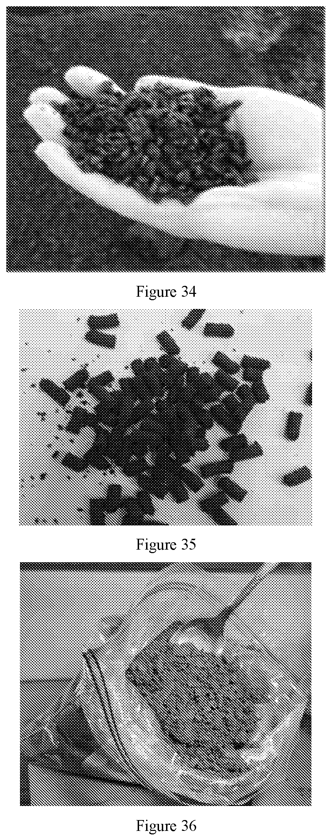

Figure 36 shows the ATR-FTIR spectra of grape pomace (A), biomaterial (B), and micronized ingredient (C) samples.

Comparing the Infrared Spectroscopy results for grape pomace, new cylindroform vitreous biomaterial, and micronized powder samples, it is possible to observe that the 1600 cm-1 band for the grape pomace spectrum is particularly intense compared to the spectra of the cylindroform biomaterial and micronized powder. These results suggest that pectin, one of the main constituents present in grape pomace, which has a structural function in the vegetable cell, is altered after the thermomechanical conversion process. This results in the de-structuring of the vegetable tissue, allowing the production of a granular and fragmentable material, a characteristic that facilitates the grinding process of the vitreous biomaterial.

### Physico-Chemical Analysis: Ultraviolet-Visible Spectroscopy (UV-Vis)

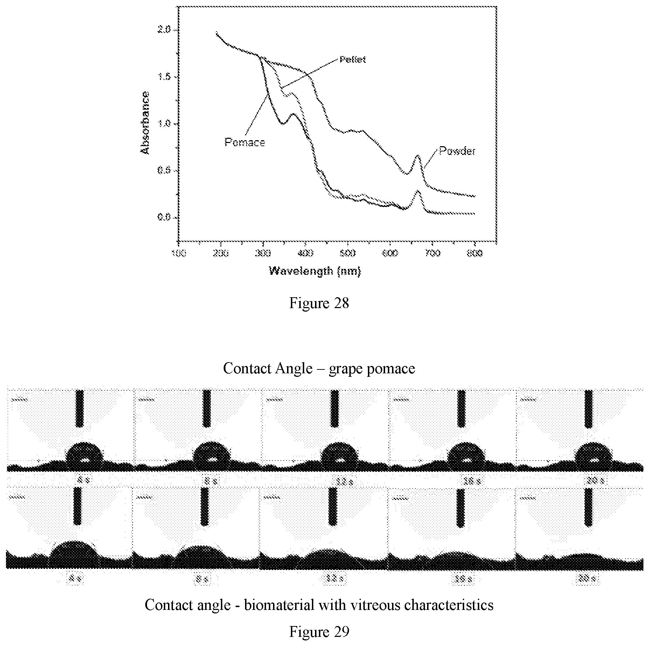

Figure 28 shows the UV-vis spectra for ethanol extraction products for grape pomace, new vitreous biomaterial, and micronized ingredient samples. In all three cases, the presence of polyphenols is observed, with bands at 550 nm associated with the presence of anthocyanins and bands at 370 nm associated with the presence of flavonoids. The blue spectrum (powder) shows a more intense band associated with the presence of anthocyanins, consistent with the increased exposed surface area of this type of sample. This result is relevant in terms of phytochemical content.

The results obtained from UV-Vis Spectroscopy are significant in terms of food quality, as the thermomechanical conversion treatment of grape pomace to generate the vitreous biomaterial and its subsequent micronization generate ultrafine particles whose bioactive compounds of interest (phytochemicals) are more available.

### Physico-Chemical Analysis: Contact Angle of Grape Pomace and Vitreous Cylindroform Biomaterial Samples

Figure 29 shows Sessile Drop images obtained in contact angle measurements. The sequence in the figure indicates a higher water absorption capacity for the cylindroform vitreous biomaterial sample compared to grape pomace, behavior due to its higher porosity.

This result is confirmed in Figure 30, by the water absorption curves over time for both samples (grape pomace (1) and new cylindroform vitreous biomaterial (2)), where the amount of water absorbed during 5 hours of immersion is similar except for the first measurement point corresponding to the first hour of measurement. Thus, water absorption is rapid for the cylindroform vitreous biomaterial sample during the first hour due to its porosity, but similar during longer immersion times. The results of the contact angle tests allow us to conclude that the vitreous biomaterial of the present invention has a higher porosity than grape pomace. The thermomechanical conversion process generates this condition in the material, causing the porosity of the material, a property that reduces its structural resistance and its ability to withstand the forces generated during grinding. This makes porous materials more susceptible to fracture, crumbling, and excessive dust generation during the grinding process.

### Physico-Chemical Analysis: Porosity Measurement by Liquid Displacement

The porosity of the grape pomace and new vitreous cylindroform biomaterial samples was determined based on liquid displacement measurements. The results indicate that, for grape pomace, 28.9% of the geometric volume is occupied by pores or spaces used by air, while in the cylindroform biomaterial the value increases to 39.8%.

These results allow us to conclude that the cylindroform vitreous biomaterial of the present invention has a higher porosity than grape pomace without thermomechanical conversion treatment. As indicated earlier, porous materials have a less dense and cohesive internal structure compared to compact materials, making them more prone to breaking or crumbling during the grinding process, resulting in increased dust generation and a reduction in the desired particle size.

### SOLUBILIZATION TESTS IN A POLARITY GRADIENT

### Solubilization Tests: Comparative Qualitative Analysis of Porosity Through Solubilization Tests in a Polarity Gradient

Solubility analysis of a sample yields specific results regarding its physical characteristics. The triturability of a sample, in this case, the biomaterial with vitreous characteristics, can be defined as the brittleness it exhibits under mechanical action. This is a highly variable characteristic, and empirical tests have been conducted to determine the force required for the triturability of the biomaterial. It can also be defined as the relative amount of work needed to pulverize said biomaterial. In this context, porosity is an important element to analyze to supplement the phenomenon of high triturability of the biomaterial, meaning that lesser porosity requires higher pressure or force to crush the sample.

Solubility studies apply to structures that are not ideal solids but materials with different porosities, which facilitate or hinder their triturability by conventional means. Thus, a material with a porous structure has a property that conditions the permeability of a solvent (liquid) in a matrix (solid) such as the vitreous cylindroform biomaterial of the current invention. It can be inferred that a material or sample is permeable when it has continuous voids. The circulation of a solvent (water or other) through the mass (biomaterial) follows physicochemical laws that relate permeability or solubility to the degree of compactability or homogeneity of the sample.

Regarding porosity, this measurement does not have an absolute value and is qualitatively assessed by the relationship between the voids and the skeleton of the structure.

A very important characteristic related to porosity that can account for the triturability of the biomaterial is permeability, i.e., the ease of fluid passage through the material. However, fluid ingress into the sample depends on the fluid. In this test, it depends on the type of solvent and the type of macromolecule capable of dissolving in this solvent and passing through the layers of the vitreous cylindroform biomaterial.

If the biomaterial is very compact, the solvation of the molecules will not be high due to a lack of effective collisions between the solvent and the sample. Conversely, a lower degree of compactability allows the facilitated ingress of the solvent, interaction with macromolecules, their solvation, and facilitated release into the environment. This indicates that the ultrastructure of the cylindroform biomaterial has heterogeneous characteristics, generating points of fracture and high triturability.

### Solubilization Tests: Test

Were conducted with 1 gram samples of the vitreous biomaterial using four solvents: non-polar, partially polar, and polar; hexane, ethanol, acetone, and water, in 25 ml volumes. Each mixture was placed in 50 ml Erlenmeyer flasks and kept in constant agitation for 24 hours at 25°C with an agitation speed of 1,300 rpm. After the agitation time, each sample was filtered, and the insoluble sediment was weighed on an analytical balance. The tests with each solvent were conducted with 5 replicates to ensure the representativeness of the results.

**Table 3: Table with the percentages of solubilization of 1 g of vitreous cylindroform biomaterial in different solvents over 24 hours at 25°C with constant agitation.**

| Solvent | Hexane | Ethanol | Acetone | Water |
|---|---|---|---|---|
| Biomaterial Solubility (%) | 7.07 | 14.56 | 8.74 | 17.85 |

### Solubilization Tests: Conclusions

From the results of the solubilization tests in a polarity gradient, it is possible to conclude that the solubility of the biomaterial is higher in water than in other less polar solvents. The high solvation in water indicates the low compactability of the material and the facilitated ingress of the solvent due to its porosity, interaction with macromolecules, and their facilitated release into the environment. This indicates that the ultrastructure of the biomaterial has heterogeneous characteristics.

### BIOACTIVE COMPOUNDS ANALYSIS

### Bioactive Compounds Analysis: Proximal Analysis of Grape Pomace, Cylindroform Biomaterial, and Micronized Powder

A comparative analysis of the proximal composition of three samples, grape pomace, vitreous biomaterial, and micronized ingredient was conducted using certified methods based on AOAC (Official Methods of Analysis for Nutrition Labeling).

Table 4 presents the results of the chemical analysis of these three food matrices in their various forms.

**Table 4**

| | Results for 100 g samples | | |
|---|---|---|---|
| Parameter | Grape pomace | New Biomaterial | Micronized powder |
| Humidity / g | 11.27 | 6.60 | 4.29 |
| Total Protein /g | 11.50 | 10.80 | 11.50 |
| Fat /g | 4.71 | 8.75 | 11.49 |
| Ashes /g | 8.81 | 6.88 | 6.85 |
| Raw fiber/g | 19.77 | 21.79 | 19.99 |
| Non-nitrogenated extract /g | 43.94 | 45.18 | 46.18 |
| Calories / kcal | 264.15 | 302.67 | 331.43 |

### Bioactive Compounds Analysis: Conclusions of Proximal Analysis of Grape Pomace, Cylindroform Biomaterial, and Micronized Powder Test

From these assays, it is evident that the micronized powder contains significant amounts of protein and crude fiber, rendering it an excellent dietary supplement. Figure 31 presents a comparative graph of the proximal analysis results for grape pomace, new cylindroform biomaterial, and micronized powder.

### Bioactive Compounds Analysis: Determination of Total Polyphenols and Antioxidants

A comparative analysis of the concentration of total polyphenols and antioxidant activity (ORAC) was conducted on three samples: grape pomace, new vitreous biomaterial, and ultrafine powder resulting from the micronization of the biomaterial (micronized ingredient). To measure the quantity of total polyphenols present, a technique based on the method by Wu et al. (J. Agric. Food Chem. 52: 4026-4037; 2004) was employed. The ORAC (Oxygen Radical Absorbance Capacity) technique was used to determine antioxidant levels in the food.

The results are presented in Table 5.

**Table 5**

| | Results for 100 g samples | | |
|---|---|---|---|
| Parameter | Grape pomace | New Biomaterial | Micronized powder |
| Tota Polyphenols / mg EAG | 1,015.7 ± 2.6 | 2,693.2 ± 4.2 | 3,925.8 ± 5.6 |
| ORAC / µmol ET | 15,235.8 ± 10.6 | 26,128.7 ± 15.6 | 38,990.5 + 18.6 |
| EAG = Galic acid equivalent | | | |
| ET = Trolox^{®} Equivalents | | | |

### Bioactive Compounds Analysis: Conclusions of the Determination of Total Polyphenols and Antioxidants Test

Comparing the quantities of antioxidant compounds and polyphenols in the three sample types, a significant increase in their concentration is observed. This indicates that the process of obtaining the new biomaterial alters the basic cellular structure of grape pomace, resulting in a modification that enables better triturability of the cylindroform biomaterial. This modification breaks down macromolecular polymers present in the cell wall, membranes, and other subcellular components, thereby increasing the bioavailability of smaller structures such as polyphenol storage granules. These results are consistent with observations made during physiological analyses using SEM images. Furthermore, the additional micronization stage of the biomaterial further enhances access to these bio-compounds.

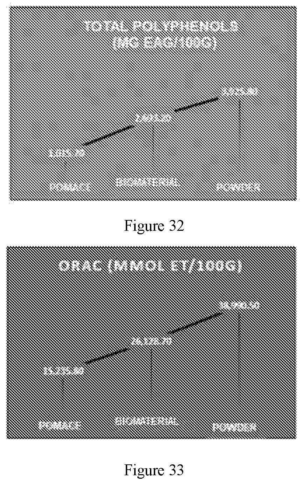

Comparative values of total polyphenol concentration and antioxidant activity (ORAC) between grape pomace, vitreous cylindroform biomaterial, and micronized powder are shown in Figures 32 and 33, respectively.

The increase in total polyphenol content between grape pomace and micronized powder corresponds to a 387% increase (Figure 32), while the increase in antioxidant capacity corresponds to a 256% increase (Figure 33).

This multiplier effect of these parameters, observed when transitioning from one material type, such as grape pomace, to another, like micronized ingredient, is attributed to the reduction in particle size of the substance. This reduction results in changes in surface and structure, affecting the release and availability of secondary metabolites present in the substance, in this case, leading to an increase in total polyphenol content. The increase in ORAC reflects the increase in polyphenols and other antioxidants present.

### Several mechanisms contribute to this phenomenon:

- Greater specific surface area: Reducing particle size increases the specific surface area relative to the volume of the substance, exposing more surface to the processes of release and extraction of polyphenols, making more polyphenols available for detection or use.
- Greater permeability: Smaller particles have greater permeability, allowing polyphenols to diffuse more easily in and out of particles, facilitating their release and availability in the surrounding environment.

### PREFERRED EMBODIMENTS OF THE INVENTION

Preferred Embodiments of The Invention: Invention: This invention introduces a novel quasy-brittle biomaterial, effortlessly reducible to ultrafine powder. Derived from vegetable pomace, this biomaterial exhibits a compression strength between 260 kPa and 360 kPa and maintains a minimum porosity of 35%.

### Preferred embodiments of the invention: Biomaterial

The biomaterial consists of: a) An outer structure characterized by its propensity for easy disintegration and fracture, exhibiting low structural integrity and non-cohesive domains; and b) An inner structure that is semi-compact, featuring planar areas created by the vitrification of specific macromolecules, which imparts quasi-brittleness to the biomaterial.

### Preferred embodiments of the invention: Micronized Powders

Additionally, the invention encompasses a multifunctional micronized ingredient. This ingredient, a homogeneous derivative of vegetable pomace, has a particle size under 74 µm. It is produced through the micronization of the aforementioned quasy-brittle biomaterial.

### Preferred embodiments of the invention: Thermomechanical Process

Moreover, the invention entails a cero residue thermomechanical process designed to entirely eliminate and transform solid agro-industrial waste or vegetable pomaces into the quasy-brittle biomaterial described above. This process involves several stages:
- Sourcing of vegetable pomace;
- Preliminary drying of the pomace;
- Feeding the pre-dried pomace into a reactor via a temperature-regulated hopper;
- Conducting a thermomechanical conversion of the pre-dried pomace, which includes:
   - Gradual heating of the pomace;
   - Moving the pomace to a vitrification zone;
   - Exit from the thermomechanical converter of final product of the quasi-vitreous cilindroform biomaterial.

In a preferred expression of the invention, a cleaning stage for the vegetable pomace is included after pre-drying. This stage may involve specific gravity and/or electromagnetic cleaning to eliminate foreign bodies that could hinder the thermomechanical conversion.

In another preferred expression of the invention, the sub-stage of advancing the pomace to the vitrification zone encompasses:
- Heating the pomace;
- Shearing the pomace;
- Compressing the pomace.

Moreover, depending on the type of pomace processed, the sub-stages in the vitrification zone may be executed in a different sequence or simultaneously.

In yet another preferred embodiment, the extrusion sub-stage leads to the expansion and drying of the formed quasy-brittle material due to the pressure differential.

Finally, the invention targets the use of the multifunctional micronized ingredient as an ingredient in food, nutraceutical, cosmetic, and pharmaceutical industries. Preferred embodiments of the invention: The following are preferred embodiments of the invention, demonstrating its application with various vegetable pomaces, including those from grapes, olives, pomegranate pericarp and arils, tomatoes, and blueberries.

EMBODIMENT 1: GRAPE POMACE

### Grape pomace: Structural Support

The cellular structure of grapes consists of various cells and tissues, including the epidermis, mesocarp, seeds, and pomace, each with different rheological properties and chemical compositions. Grape skin is rich in compounds such as tannins, anthocyanins, and lignin, which form complexes with other molecules in the pomace and seeds, making their thermo-mechanical conversion challenging. Seeds have a strong cellular structure and are joined by a membrane containing polysaccharides and proteins contributing to the viscoelasticity of the pomace. Grape pomace is a rich source of polyphenols and organic acids that interact with other components, such as proteins and carbohydrates, affecting the rheology of the raw material during the thermo-mechanical conversion process. This pomace exhibits viscoelastic and thermoplastic rheological behavior.

### Grape Pomace: Process Description

12,500 kg of grape pomace from Cabernet Sauvignon red grape variety with 60% moisture content were processed. The pomace underwent an initial pre-drying stage in drying hoppers until it reached 30% moisture content, reducing the weight to 7,250 kg of pomace. Subsequently, a two-stage cleaning process was performed, first by specific gravity cleaning and then by electromagnetic cleaning, to remove foreign bodies that could damage the thermo-mechanical conversion equipment. Figure 34 shows the grape pomace before undergoing the thermo-mechanical treatment.

This material was fed into the thermo-mechanical conversion reactor, a Clextral BC72 model. Approximately 6,400 kg of cylindroform biomaterial, 20 mm long and 4 mm in diameter, with 20% moisture content were obtained (Figure 35). The resulting cylindroform biomaterial was dried to 5% moisture content and then micronized using an ACM mill, resulting in 5,250 kg of micronized multifunctional ingredient with 3% moisture content (Figure 36).

### Grape Pomace: Detailed Description of the Thermo-Mechanical Conversion Process

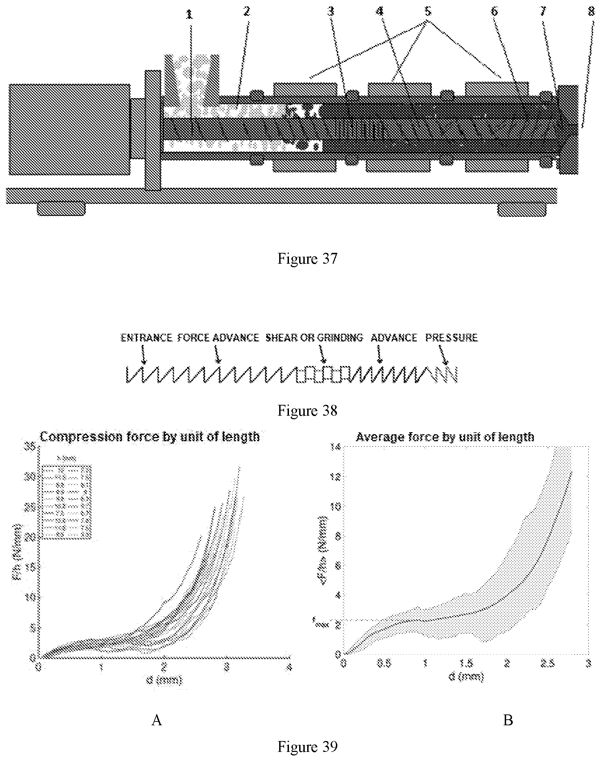

Figure 37 delineates the key sectors and/or injection points critical for water, oil, temperature induction, pressure, and the configuration of principal reactor elements essential for converting grape pomace into a new, compact, and easily manipulable cylindroform biomaterial.
1. Hopper, Storage, and Dosing: Due to the pomace's tendency to settle and compact, the extruder equipment's hopper should not be completely filled. This issue was mitigated by lowering the level sensor, thus reducing material accumulation and preventing agglomeration. The hopper level for this material was maintained between 15 and 30 kg.
2. Reactor Inlet: The raw material, upon entry into the reactor, is propelled by the shafts' movement. Here, screws with trapezoidal geometry facilitate advancement and prevent backpressure.
3. Water Injection: This stage involves adding water at a rate of 125 to 750 ml/min, enhancing the raw material's advancement without significantly impacting the applied mechanical force.
4. Shearing and Kneading: This segment of the process employs a geometry that delivers work without causing advancement, creating friction that triturates and kneads the product. The mixture's movement results from the trapezoidal screw's thrust in the preceding section.
5. Controlled Advancement Screws: Post shearing, a configuration that facilitates controlled advancement of the triturated material is employed. Resistance in this section is due to the slimmer screw geometry, preparing the material for the next phase.
6. Temperature Induction: Temperature is induced throughout the process, aiding in advancement, grinding, emulsion formation, and pressure. The operating temperature ranges from 120°C to 190°C.
7. Pressure: Generated by screws with negative geometry, this stage creates controlled resistance to flow, crucial for finalizing the grinding of the mixture. The presence of fat in the seeds, along with water, temperature, and mechanical force, leads to emulsion formation, pivotal for the cylindroform biomaterial's development.
8. Gap: At this process point, mechanical force is ceased (end of movement), and the gap, ranging between 4 to 7 mm, functions as a chamber for product accumulation before exiting the reactor. An inadequate gap length can lead to over-retention, potentially clogging the reactor or causing pressure pulses, which can hinder the formation of the cylindroform biomaterial.
9. Matrix: Situated at the reactor mixture's outlet, the flow of the product through the matrix inserts' openings must be calculated, ranging from 0.5 to 0.75 g/min for each outlet. This is aligned with the raw material's feed rate into the reactor (240 kg/h). The diameter of these inserts varies between 3 to 4 mm, with pressure ranging from 25 to 35 bar. Inadequate pressure can lead to the formation of only ground material, while excessive pressure might destroy the cylindroform biomaterial due to overpressure.

### Grape Pomace: Configuration of Internal Sub-Operations of the Thermo-Mechanical Conversion Reactor

Figure 38 illustrates the internal configuration necessary to achieve controlled conditions for dragging, advancement, shearing, kneading, grinding, temperature, pressure, and other required sub-operations. These ensure the successful thermo-mechanical conversion of grape pomace into a compact and manipulable cylindroform biomaterial for use in producing micronized ingredients.

### Grape Pomace: Brittleness Level (Triturability) - Side Crushing Strength (SCS) Diametral Compression.

SCS test results suggest that the grape pomace cylindroform biomaterial exhibits quasy-brittle behavior, with force curves showing several successive drops, likely indicative of small-scale fracture events. The right graph displays force per unit length (f = F/h), averaged for all SCS tests. The curve's inflection point, fmax/h = 2,2984 N/mm, denotes the traction strength for the SCS test on grape pomace specimens, equating to 305.12 kPa. Figure 39A represents Longitudinal Compression Force (per unit length) vs. Displacement (F vs. d) for 20 specimens. To assess the strength of the cylindroform biomaterial, the average longitudinal force for these specimens was calculated (Figure 59B), showcasing the envelope of the 20 curves and highlighting the average curve of the 20 tests in red.

### EMBODIMENT 2: OLIVE POMACE OR ALPERUJO

### Olive Pomace: Generation Stages

The generation of olive pomace, also known as alperujo, is an integral part of the olive oil production process. The following are the key stages of this process, with a focus on the genesis and evolution of the pomace:
1. Olive Harvesting: Olives are harvested from trees either manually or using mechanized methods.
2. Cleaning and Sorting: This step involves the purification and selection of olives, removing impurities and leaves, and choosing the highest quality olives for oil extraction.
3. Grinding: In this stage, olives are ground, breaking the flesh to expose the pomace and cells containing oil. Here, the initial separation of pomace begins.
4. Paste Mixing: The ground paste is mixed, enhancing the release of oil from the cells.
5. Oil Extraction: The olive paste is then subjected to pressing or centrifugation, separating the olive oil. The solid residue left is the olive pomace or alperujo.
6. Phase Separation: This stage involves separating the oil from water and other residues, which constitute part of the alperujo in two-phase centrifugation or become part of the orujo and alpechin in pressing methods.
7. Grinding, oil extraction, and phase separation are particularly crucial in the generation of pomace.

### Olive Pomace: Structural Support (Level of Triturability)

Olive pomace, composed of skins, residual pomace, and bone fragments, is a byproduct of olive oil production. It exhibits a high structural support capacity, thus having a low level of triturability. The components contributing to this structural robustness include:
1. Olive Skin (Epicarp): Acting as the fruit's protective outer layer, the olive skin is made of densely packed epidermal cells with a fibrous structure. Its thickness and hardness, fortified by sclerenchyma tissue and lignified cells, provide substantial resistance and protection against external factors.
2. Olive Pomace (Mesocarp): This middle layer of the fruit comprises parenchymal cells filled with water and nutrients. Although not the primary contributor to structural support, it plays a role in the internal cohesion of the alperujo.
3. Olive Bone Fragments (Endocarp): Constituting about 7-8% by weight, these fragments are hard and resistant, composed of lignin and cellulose, and contribute significantly to the mechanical resistance of the alperujo.

Overall, the combination of the fibrous skin, filler pomace, and the hard olive bone ensures a robust and stable structure for the alperujo.

### Olive Pomace: General Process Description

Approximately 850 kg of olive pomace was processed, initially with a moisture content of about 60%. The moisture was reduced to approximately 32% through a three-stage drying process at 45°C, resulting in around 500 kg of drier material. This material was then fed into the same Clextral model BC72 thermomechanical conversion reactor used for grape pomace, producing about 430 kg of cylindroform biomaterial with 21% moisture. A final drying stage reduced the moisture content to 5%, resulting in 358 kg of the biomaterial. Micronization of this material using an ACM mill yielded approximately 351 kg of the final product with 3% moisture. The raw material in the thermomechanical conversion process tended to agglomerate due to its fat content. To prevent this, the hopper level was set below 20 kg. Olive bone particles, sized between 1.5 to 3 mm and constituting 7-8% of the raw material, posed a significant challenge in the thermomechanical conversion process. The goal was to crush these particles without impeding the raw material's progress in the converter.

### Olive Pomace: Detailed Description of the Thermomechanical Conversion Process

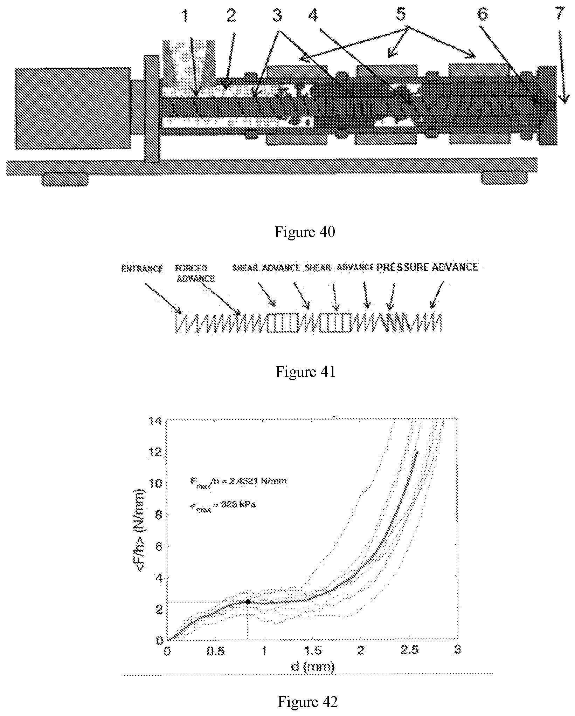

Figure 40 illustrates the necessary sectors, water and oil injection points, temperature induction, pressure, and reactor element configurations for converting olive pomace into a compact, manipulable cylindroform biomaterial.
1. Hopper: Due to the alperujo's tendency to reposition and compact, the hopper's level sensor was adjusted to reduce accumulation and agglomeration, maintaining a level between 10 and 25 kg.
2. Reactor Inlet: The trapezoidal screw design aids in advancing the raw material while preventing counter-pressure.
3. Water Injection: Water is added at a rate of 125 to 750 ml/min to assist raw material advancement.
4. Shearing and Kneading: The presence of fatty material necessitated dividing the shearing into two sections to maintain effective grinding without losing traction.
5. Pressure: A screw with negative geometry facilitates controlled retention and adjustment of raw material retention levels.
6. Temperature Induction: Temperatures ranging from 120 to 180°C are applied from the start of shearing to the end of the process.
7. Internal Outlet Gap: The GAP, ranging from 4 to 8 mm, ensures stability in output pressure and homogeneity of the product.
8. The matrix section's design, with outlets ranging from 3 to 4 mm in diameter, allows for a production flow of 80 to 480 kg/h at pressures between 30 and 45 bars. This thermomechanical conversion process is pivotal in producing a manipulable, cylindroform biomaterial from olive pomace.

### Olive Pomace: Configuration of Internal Sub-Operations in the Thermomechanical Conversion Reactor

The ensuing schematic delineates the logic behind the internal setup used to create a compact, easily handled cylindroform biomaterial.

Figure 41 illustrates the necessary internal configuration to attain controlled conditions for traction, advancement, shearing, kneading, crushing, temperature, and pressure, among other vital sub-operations. This setup is crucial to ensure the successful thermomechanical conversion of olive pomace into a cylindroform biomaterial, ideal as a primary material for producing a 'micronized ingredient.

For the effective thermomechanical conversion, optimal traction and grinding are imperative. Due to the presence of lipids and olive pit particles, the shearing process was divided into two distinct sections. The rigidity of the olive pit was considered specifically for the mixture's crushing. These particles also facilitated the grinding of softer elements in the mix during the kneading stage. Consequently, a more aggressive configuration was adopted, incorporating an advancement screw between the two shearing stages to ensure thorough grinding without compromising traction. During the pressure phase, all particles were fully crushed.

### Olive Pomace: Quasy-brittleness Level Axial Compression Test (SCS, Side Crushing Strength)

Figure 42 presents nine force (F - compression) vs. displacement (d) curves from the diametral SCS (Side Crushing Strength) compression test conducted on specimens derived from the thermomechanical conversion of olive pomace. The force per unit length (F = F total/t h test cylinder) is calculated, with the red curve indicating the average of the nine tests. Notably, this test, despite being a compression assessment, is used to deduce traction strength (σf), presuming that specimen fracture occurs along the line of compression. The inflection point (fmax) of the average red curve facilitates the calculation of traction strength (σf), which in this instance equals 323 kPa. All tests were performed at a constant speed of 1 mm/min, automatically stopping when the force reached 200N. The resulting force curves display several successive drops, indicative of minor fracture events. These findings suggest that the cylindroform biomaterial from olive pomace exhibits quasy-brittle behavior (σf = 323 kPa).

### Olive Pomace: Bioactive Compounds

Olive pomace is a reservoir of various bioactive compounds, making it a promising candidate for applications in the food, nutraceutical, pharmaceutical, and cosmetic industries. These compounds include:
1. Phenols: Providing antioxidant properties, these compounds may offer anti-inflammatory and anticancer benefits.
2. Fatty acids: Beneficial for cardiovascular health, these remain in the pomace post oil extraction.
3. Fiber: Abundant in the pomace, contributing to digestive health.
4. Hydroxytyrosol: A potent antioxidant phenol, potentially advantageous for cardiovascular health.
5. Lignans: Known for their antioxidant capabilities and potential heart health benefits.
6. Flavonoids: Antioxidants that may improve brain function and reduce the risk of chronic diseases. The presence of these bioactive compounds makes olive pomace a subject of interest for various product developments.

### Olive Pomace: Particle Size Distribution of Micronized Powder

The particle size distribution analysis encompassed 300 particles, fitting a Gaussian curve. Statistical analysis, with a 95% confidence level, indicates that 77% of the particles fall within the 5 - 20 µm range, and 90% do not exceed 30 µm (Table 6).

**Table 6**

| Size (µm) | N° of particles | % of particles |
|---|---|---|
| 5 - 10 | 92 | 30.7 |
| 10 - 20 | 140 | 46.7 |
| 20 - 30 | 38 | 12.7 |
| 30 - 40 | 15 | 5.0 |
| 40 - 50 | 10 | 3.3 |
| 50 - 100 | 5 | 1.7 |
| total | 300 | 100 |

### EMBODIMENT 3: POMEGRANATE PERICARP POMACE AND POMEGRANATE ARIL POMACE

### 3.1 POMEGRANATE PERICARP POMACE

### Pomegranate Pericarp Pomace: Generation Stages

1. Deseeding (Aril Separation): In this phase, pomegranates are split open, and the arils are segregated from the shell and internal membranes. The resulting byproduct is the pericarp waste pomace, comprising shell residues (exocarp), white inner skin (mesocarp), and internal membrane residues (endocarp). Typically, the pericarp consists of roughly 50% exocarp, 35% mesocarp, and 15% endocarp. The waste generated at this stage is referred to as 'deseeding stage pomace.'
2. Pressing (Juice Extraction): The arils are then pressed to extract juice, leaving behind a solid residue termed 'aril stage pomace,' primarily composed of seeds, membrane remnants, and pomace, occasionally including small pericarp fragments.

### This report focuses on the pomace from the deseeding stage.

### Pomegranate Pericarp Pomace: Structural Support (Triturability Level)

The structural integrity of 'deseeding stage pomace' primarily derives from parenchyma cells and cell walls reinforced with cellulose and hemicellulose. Lignin, a rigidity-enhancing polymer, is also a significant component. Large vacuoles within these cells add turgidity, and the abundant presence of tannins strengthens the pomace's structure. Key elements include:
1. Cellulosic Fibers: These fibers, abundant in the pericarp, provide strength and rigidity and could be utilized in reinforced composites, paper, and textile production.
2. Pectin: A vital cell wall polysaccharide in many fruits, pectin can serve as a gelling or binding agent in various applications.
3. Lignin: Although less abundant than in other vegetable residues, lignin in the pericarp contributes to structural rigidity and could be used in bioplastic or reinforced composite manufacturing.
4. Cutin and Wax: Present in the pericarp's outermost layer, these components offer impermeability and could be utilized in creating water-resistant materials.
5. Seeds: Sometimes present in the pericarp, seeds can act as reinforcing or bulking agents in manufacturing boards and other biomaterials.

### Pomegranate Pericarp Pomace: General Process Overview

Around 380 kg of pericarp pomace was processed. Some particles were larger than 50 mm, necessitating a test of the thermomechanical converter feeder, which yielded positive results. The raw material, initially with about 65% moisture, underwent pre-drying in a 3-level rotary dryer at a controlled temperature of 45°C for 10 minutes. After five cycles, the moisture content was reduced to approximately 20%, making it suitable for thermomechanical conversion. The pre-dried pomace, weighing 166 kg, was processed in a Clextral BC72 double screw reactor, resulting in about 151 kg of compact, manageable cylindroform biomaterial with around 12% moisture. A final drying stage in a hopper produced approximately 140 kg of vitreous-characteristic cylindroform biomaterial with 5% moisture. Micronization using an ACM mill yielded about 137 kg of the final product with 3% moisture.

### Pomegranate Pericarp Pomace: Detailed Description of the Thermomechanical Conversion Process

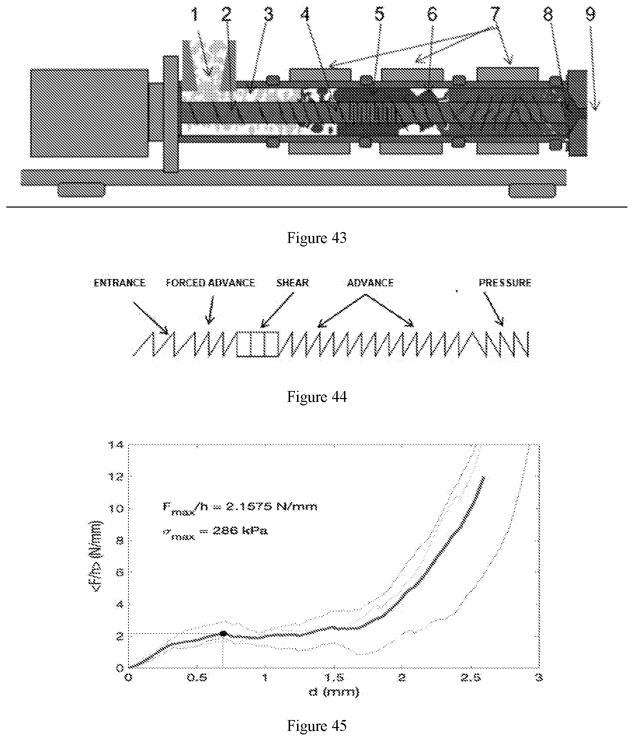

Figure 43 depicts the sectors and/or points for water and oil injection, temperature induction, pressure, and the main reactor elements for the thermomechanical conversion of pomegranate pericarp pomace into a compact, manageable cylindroform biomaterial.
1. Feeding Hopper: The fill level was kept low to minimize compactability, with the sensor adjusted to maintain a capacity of 60-100 kg.
2. Reactor Entry: A trapezoidal geometry screw was used to advance the product and create forward pressure to counteract counterpressure.
3. Water Injection: Water, ranging from 100 to 300 ml/min, and vegetable oil were injected to lubricate the process and form a necessary emulsion for the biomaterial's structure.
4. Shearing and Kneading: This stage involved crushing pericarp and any present seed/aril fragments, with a 90 mm shearing section implemented due to the relatively low resistance to kneading.
5. Controlled Advancement Screw: A specially designed screw was used to regulate advancement, with the space between the extruder walls and the screw thread determining the speed.
6. Pressure: Negative geometry screws were used to control pressure and destroy uncrushed particles, with the motion and temperature creating an essential emulsion.
7. Temperature Induction: Heat ranging from 120°C to 180°C was applied in three stages to soften the mixture.
8. Gap: The space between the end of the screws and the inner face of the outlet was maintained at 6 to 12 mm to control output pressure.
9. Matrix: Perforations between 3 and 4 mm were used, shaping the product and causing final retention before forming the cylindroform biomaterial. The workflow ranged from 70 to 420 kg/h, with pressures of 25 - 40 bars.

With these parameters, a compact, manageable cylindroform biomaterial was successfully produced.

### Pomegranate Pericarp Pomace: Configuration of Internal Sub-Operations in the Thermomechanical Conversion Reactor

The near absence of seeds allows for a configuration with shearing (kneaders) that ensures product grinding without losing traction, resulting in a good level of internal grinding. Oil injection is also necessary to generate the emulsion enabling the creation of a compact, manageable cylindroform biomaterial. As indicated in the diagram, the chosen configuration includes: 1) a shearing point, 2) a controlled advancement point causing friction that contributes to grinding, and 3) a negative pressure section at the end of the process. This configuration more efficiently generates the emulsion.

Figure 44 indicates the internal configuration required to achieve controlled conditions of traction, advancement, shearing, kneading, crushing, temperature, pressure among other required sub-operations, ensuring the thermomechanical conversion of pericarp pomace into a compact, manageable cylindroform biomaterial suitable as a raw material for obtaining a final product, "micronized ingredient."

### Pomegranate Pericarp Pomace: Level of Brittleness - Diametral Compression Test (SCS)

Figure 45 shows three curves: F (compression) vs. d (displacement), obtained from the diametral SCS (Side Crushing Strength) compression test applied to specimens made from the thermomechanical conversion of pericarp pomace. The force is calculated per unit length (total force divided by the height of the specimen) (F = F total/h test cylinder). The red curve represents the average of the three tests. Despite being a compression test, this test is used to infer traction strength (of), assuming that specimen fracture occurs along the line connecting the points where the specimen is compressed. The inflection point (fmax) of the average red curve allows for the calculation of traction strength (σf), which in this case corresponds to 286 kPa. In all tests, compression was performed at a constant speed of 1 mm/min and automatically stopped when the force reached 200 N. The force curves obtained show several successive drops, likely associated with minor fracture events. The results of this test suggest that the cylindroform biomaterial of pericarp pomace exhibits quasy-brittle behavior (σf =286 kPa).

Figure 45 shows the three curves: F (compression) vs. d (displacement) obtained from diametral compression tests of specimens made from the thermomechanical conversion of pericarp pomace. The red curve represents the average of all the tests.

### Pomegranate Pericarp Pomace: Bioactive Compounds

1. Epicarp: Anthocyanins, containing cyanidin-3-glucoside and delphinidin-3-glucoside. These compounds have high antioxidant capacity and may contribute to cellular protection against oxidative damage.
2. Mesocarp: Ellagic Acid, a polyphenol present in the pomegranate mesocarp. Flavonoids, including quercetin and kaempferol.
3. Endocarp: Punicic Acid, an omega-5 fatty acid found in the pomegranate endocarp. It's one of the most valuable compounds in terms of its bioactive value.

### EMBODIMENT 3.2: POMEGRANATE ARIL POMACE

### Pomegranate Aril Pomace: Generation of Aril Pomace

1. Washing and Classification: Pomegranates are washed to remove any contaminants and then sorted based on size and quality. No pericarp residue or other type of pomace is generated at this stage.
2. Aril Separation: At this stage, pomegranates are split, and the arils are separated from the shell and internal membranes.
3. Pressing (Juice Extraction): The separated arils are pressed to extract pomegranate juice. The solid residue remaining after pressing the arils is known as "pressing stage pomace," consisting mainly of pomegranate seeds and remnants of membranes and aril pomace, and may also contain small pericarp fragments.

### Pomegranate Aril Pomace: Structural Support (Triturability Level)

1. Pressing stage pomace mainly consists of pomegranate seeds and aril pomace remnants. Post-juice extraction aril residues have reduced structural stability. Once pressed, the arils become brittle, losing much of their original strength. While they still contain fibers, these do not contribute significantly to structural stability as in their unprocessed state.
2. Pomace remnants vary in size and shape due to the irregular nature of the pressing process. Generally, these remnants are small and fibrous. After juice extraction, the pomace's density will be higher than the original fruit due to water loss, though a considerable amount of water may still be present, making the density lower than completely dry pomace.
3. The aril structures may be damaged by the juice extraction process, but the cell wall still provides some resistance to collapse. Cellulose and hemicellulose in the cell walls form a rigid matrix that provides structural strength. Additionally, parenchymal cells may contain reserve organelles like vacuoles, which contribute to cell turgidity and strength when filled with water or metabolites.
4. Aril seeds are protected by a juicy aril layer. While the aril itself does not provide much structural stability, the inner seed has a robust outer coating and a honeycomb-like internal structure that provides support. The seeds are oval-shaped, measuring approximately 3-4 mm in length, 2-3 mm in width, and 1-2 mm in thickness.

### Pomegranate Aril Pomace: General Process Description

Approximately 410 kg of aril pomace was processed. The raw material arrives with a moisture content of about 70%, necessitating a pre-drying stage. The pomace is pneumatically sucked and transferred to a 3-level rotary dryer, using a controlled temperature of 45°C and a residence time of 10 minutes. After 4 drying cycles, a final moisture content of about 25% is achieved, falling within the necessary range for thermomechanical conversion. The pre-dried raw material, amounting to 164 Kg, is fed into a Clextral BC72 twin-screw reactor, from which approximately 143 kg of compact, manageable cylindroform biomaterial with about 14% moisture is obtained. This cylindroform biomaterial undergoes a final drying stage in a hopper, resulting in approximately 129 kg of vitreous characteristic cylindroform biomaterial with 5% moisture. The vitreous characteristic cylindroform biomaterial is micronized using an ACM mill, yielding approximately 126 kg of the final product with 3% moisture.

### Pomegranate Aril Pomace: After Juice Extraction

Pomegranate aril pomace post-juice extraction exhibits very low structural stability. Once pressed, the arils become extremely brittle, losing much of their original strength, though they still contain some fibers contributing to structural stability. In contrast, the seeds are quite stable due to their honeycomb-like internal structure, providing a high level of structural support. Therefore, an aggressive screw configuration is necessary to efficiently grind the seeds, ensuring good kneading and effective material traction within the reactor.

### Pomegranate Aril Pomace: Detailed Description of the Thermomechanical Conversion Process

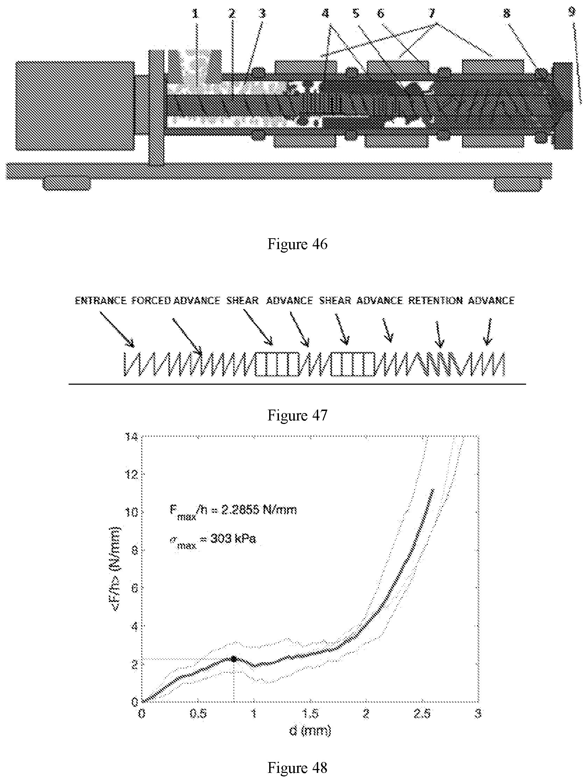

Figure 46 indicates the sectors and/or points for water and oil injection, temperature induction, pressure, and the configuration of the main elements of the reactor necessary for the thermomechanical conversion of pomegranate aril pomace into a compact, manageable cylindroform biomaterial.
1. Feeder Hopper: The feed hopper sensor was adjusted to a level range of 15 - 45 kg, kept at minimum capacity due to the susceptibility of the raw material to compactability by weight.
2. Reactor Entry: The raw material is forced to advance by a trapezoidal geometry screw, generating forward pressure and preventing back pressure due to lack of traction.
3. Water Injection: Aids in lubricating the process, allowing advancement without excessive loss of mechanical force, injecting water in the range of 125 to 750 ml/min.
4. Shearing and Mixing: In this section, the crushing of the membranes and seeds present in the aril pomace occurs. Due to the high seed content, the shearing section should be long, but too lengthy a section might clog and halt the reactor. The thermomechanical converter used allows dividing the long section into two parts, interspersed with an advancement screw as described in point 3. The geometry of these sections is designed exclusively for mechanical work, thus not generating advancement, only kneading. Traction is generated by the thrust of the screw from the previous section.
5. Controlled Advancement Screw: The subsequent stage also requires a special geometry as the advancement must be very controlled. A widely spaced thread generates high speed, and a closely spaced thread retains the product. A short step was used, ensuring a controlled and constant speed.
6. Pressure: Generated with a negative geometry screw, which by creating retention, allows control, destroying any particles not crushed in the previous shearing sections. This configuration also generates the emulsion.
7. Temperature Induction: Conducted in 3 stages ranging from 120°C to 180°C, aiding the entire process by softening the pomace, facilitating shearing, and emulsion generation.
8. Gap: The space between the end of the screws applying mechanical force and the inner part of the exit must be in the range of 6 to 10 mm, sufficient to maintain control over the exit pressure.
9. Matrix: Corresponds to the reactor's external outlet, has perforations with diameters ranging from 3 to 4 mm, determines the final product shape, and allows a final retention generating pressure in the range of 25 to 35 bar, before creating the cylindroform biomaterial. The number of outlets can range from 2 to 12, producing an output flow in the range of 80 to 480 kg/h.

### Pomegranate Aril Pomace: Configuration of Internal Sub-Operations in the Thermomechanical Conversion Reactor

In response to the high concentration of seeds, effective grinding necessitates dual shearing. A prolonged shearing section, approximately 140 mm in length, could impede the process. Therefore, it was resolved to divide this section into two equal segments of 70 mm each, interspersed with an advancement screw to enhance traction. This adjustment facilitates essential kneading without losing traction. Another critical aspect was the optimization of the pressure area, which spans the entire configuration. This design effectively produces a superior emulsion with the existing lipids, negating the need for additional oil.

Figure 47 illustrates the internal configuration required to maintain controlled conditions for traction, advancement, shearing, kneading, crushing, temperature, pressure, and other essential sub-operations. This arrangement is crucial for transforming pomegranate aril pomace into a compact, manageable cylindroform biomaterial, suitable as a raw material for creating a final product, namely a micronized ingredient.

### Pomegranate Aril Pomace: Quasy-brittleness Level in SCS (Side Crushing Strength)

Figure 48 displays three force (F - compression) versus displacement (d) curves, derived from the diametral SCS (Side Crushing Strength) compression test on specimens made from the thermomechanical conversion of pomegranate aril pomace.

The force per unit length is calculated as (F = F total/h test cylinder). The red curve, representing the average of the three tests, allows for calculating the traction strength (σf), which is 303 kPa. The force curves, characterized by several successive drops, suggest minor fracture events and indicate that the cylindroform biomaterial from pomegranate aril pomace exhibits quasy-brittle behavior (σf = 303 kPa).

### Pomegranate Aril Pomace: Bioactive Compounds

1. Seeds: Rich in punicic acid, an omega-5 fatty acid, pomegranate seeds exhibit antioxidant and anti-inflammatory properties, contributing to cardiovascular and skin health. They also contain phytosterols, vegetable-based compounds that help reduce LDL cholesterol and enhance cardiovascular health.
2. Endosperm: This part of the aril is loaded with polyphenols such as ellagic acid, ellagitannins, and proanthocyanins, known for their antioxidant, anti-inflammatory, and anticancer properties. Additionally, it contains dietary fiber, beneficial for digestive health and satiety.
3. Pulp: Comprising anthocyanins, the pulp has pigments that give the arils their vibrant red color, offering antioxidant and anti-inflammatory benefits, and aiding cardiovascular health and chronic disease prevention. It is also a rich source of ascorbic acid (vitamin C), essential for immune and skin health, and flavonoids like quercetin and kaempferol, known for their antioxidant and anti-inflammatory properties.

These bioactive compounds synergistically interact, potentially enhancing their health benefits. In essence, the seeds are a source of punicic acid and phytosterols; the endosperm contains polyphenols and dietary fiber; and the pomace is rich in anthocyanins, vitamin C, and flavonoids. Collectively, these bioactive compounds contribute to the health benefits associated with consuming pomegranate arils."

### EMBODIMENT 4: TOMATO POMACE

### Tomato Pomace: Stages of Generation

1. Tomato pomace is a byproduct of processing tomatoes in the production of tomato-based products such as puree, sauce, or ketchup.
2. The generation of tomato pomace encompasses several stages:
3. Selection and Washing: Tomatoes are meticulously selected and washed to remove surface impurities and ensure quality.
4. Blanching: A blanching process involving high-temperature heating for a brief period softens the tomatoes, aiding in the removal of skins.
5. Pomaceing and Deseeding: At this critical stage, tomatoes undergo processing through a pomaceing and deseeding machine. This process separates the pomace and juice from unwanted components like skins and seeds, producing the byproduct known as tomato pomace.

Tomato pomace primarily comprises skins, seeds, and occasionally residual pomace from the manufacturing of tomato products. Its potential utility in various applications has gained attention.

### Tomato Pomace: Structural Support

Tomato pomace is a complex matrix mainly consisting of water and structural compounds:
1. Cellulose: A major component of the cell wall in tomato pomace, providing mechanical resistance and contributing to tissue structure.
2. Hemicellulose: Less rigid than cellulose, this cell wall component contributes to structural support and water retention.
3. Pectin: Concentrated in the middle lamella, pectin acts as a bonding agent, enabling firm cell connections for a more rigid structure.
4. Lignin: Though present in smaller quantities, lignin adds stiffness and resistance to decomposition and is found in ripe tomato pomace.
5. Proteins: These structural proteins, though less abundant than polysaccharides, contribute as enzymes in the formation and breakdown of structural components,
6. Suberin: Mostly found in tomato skin, this lipid polymer aids in water resistance and pathogen protection.

### Tomato Pomace: General Process Description

Approximately 400 kg of tomato pomace with an initial moisture content of 58% was processed. The pomace underwent pre-drying in a 3-level rotary dryer at a controlled temperature of 45°C for 10 minutes. After four drying cycles, the moisture content was reduced to around 20%.

The pre-dried pomace, weighing 210 kg, was processed in a Clextral BC72 double screw reactor, yielding 189 kg of compact, manageable cylindroform biomaterial with about 11% moisture. This biomaterial was further dried in a hopper to produce 177 kg of vitreous-like characteristic biomaterial with 5% moisture. Micronization using an ACM mill resulted in approximately 173 kg of the final product with 3% moisture.

### Tomato Pomace: Detailed Description of the Thermomechanical Conversion Process

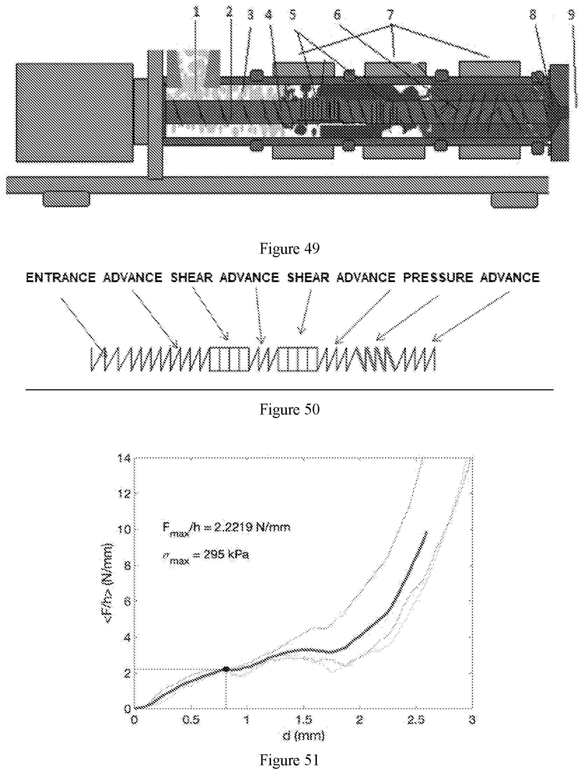

Figure 49 shows the necessary sectors and points for water and oil injection, temperature induction, pressure, and the configuration of the main reactor elements for the thermomechanical conversion of tomato pomace into a compact, manageable cylindroform biomaterial.
1. Feeder Hopper: Maintained at a minimal capacity due to the raw material's self-compactability tendency, the fill sensor level was adjusted to a range of 15 - 30 kg.
2. Reactor Entry: A trapezoidal geometry screw pulls the raw material, facilitating product advancement and preventing back pressure or reactor clogging.
3. Water Injection: Water is injected between 125 to 750 ml/min to lubricate the process without significant mechanical force loss.
4. Shearing and Mixing: Involving the crushing of skin and seeds, the section is split into two parts separated by an advancement screw to ensure effective shearing without losing traction.
5. Controlled Advancement Screw: This stage employs a screw with special geometry for controlled advancement, where the thread spacing affects the advancement speed.
6. Pressure: A negative geometry screw creates retention, controlling pressure and emulsifying any uncrushed particles.
7. Three-Stage Temperature Induction: Ranging from 120° to 180°C, the heat softens the pomace, aiding in grinding, traction, and emulsion formation.
8. Gap: Set between 6 to 10 mm, this gap controls exit pressure.
9. Matrix: With outlets ranging from 2 to 12, the matrix shapes the final product, enabling a production flow of 80 to 480 kg/h and a pressure range of 30 to 45 bars.

This process configuration successfully produces a compact, manageable cylindroform biomaterial from tomato pomace.

### Tomato Pomace: Configuration of Internal Sub-Operations in the Thermomechanical Conversion Reactor

Figure 50 delineates the essential internal configuration required to establish controlled conditions for traction, advancement, shearing, kneading, crushing, temperature, pressure, and other requisite sub-operations. This setup is instrumental in transforming tomato pomace into a compact, manageable cylindroform biomaterial, which is ideal as a raw material for the production of the final product, known as a micronized ingredient.

Given the inherent lack of rigidity in tomato pomace, coupled with its flexibility and the unique, small, rhomboid geometry of its seeds, the conversion process is complex. To circumvent process stagnation, a lengthy shearing section is necessary, segmented into two parts and separated by an advancement screw.

### Tomato Pomace: Thermomechanical Converter Configuration

Figure 50 provides a detailed view of the configuration employed, illustrating the functionality of screws within the thermomechanical converter, spanning four distinct zones including the entry point. The diagram highlights the internal arrangement of elements, such as screws and threads, critical for the reactor to effectively drag and advance the mixture, execute shearing, perform kneading, generate emulsion, and more. These operations are crucial for converting tomato pomace into a cylindroform biomaterial, which is subsequently required for the final micronization process to obtain the micronized ingredient.

### Tomato Pomace: Quasy-brittleness Level in Axial Compression Testing

Figure 51 presents three force (F - compression) vs. displacement (d) curves, derived from the diametral SCS (Side Crushing Strength) compression test on specimens created from the thermomechanical conversion of tomato pomace. The force is calculated per unit length (F = Ftotal/h test cylinder), with the red curve depicting the average of the three tests. Notably, this test, while primarily a compression analysis, is utilized to infer the traction strength (of), assuming that specimen micro-fissure occurs along the line of compression. The inflection point (fmax) of the average red curve enables the calculation of traction strength (of), here equating to 295 kPa. Each test was conducted at a constant speed of 1 mm/min, ceasing automatically when the force reached 200N. The force curves, characterized by multiple successive drops, suggest minor fracture events, indicating that the cylindroform biomaterial from tomato pomace exhibits quasy-brittle behavior (σf = 295 kPa).

### Tomato Pomace: Bioactive Compounds

1. Pulp: Lycopene, a carotenoid and the predominant bioactive compound in tomatoes, imparts their iconic red color and offers significant antioxidant properties. Additionally, tomato pomace is a rich source of vitamin C.
2. Seeds: These contain fatty acids, including essential ones such as linoleic acid and linolenic acid.
3. Skin: The tomato skin mirrors the pomace in its lycopene content, offering concentrated antioxidant properties. It also contains various flavonoids, including quercetin and kaempferol, contributing to its bioactive value.

### EMBODIMENT 5: BLUEBERRY POMACE

### Blueberry Pomace: Generation Process

1. The generation of blueberry pomace, a byproduct of juice production, begins with the washing and sorting of blueberries to eliminate damaged or unsuitable fruits, thereby ensuring the quality of the final juice.
2. During the crushing phase, blueberries are crushed to rupture their skins and release juice from the pomace. Some producers may employ maceration, heating the blueberries to further facilitate juice release.
3. The crushed mixture is then subjected to mechanical pressing to extract the maximum amount of juice, resulting in blueberry pomace, which consists of skins, pomace, and seeds.
4. In the clarification process, the extracted juice is refined to remove fine solids through methods like sedimentation, filtration, or centrifugation. The solids extracted at this stage may also contribute to the pomace.

### Blueberry Pomace: Structural Support (Triturability Level)

1. The blueberry skin, though thin and delicate, is robust due to cellulose, hemicellulose, cutin, tannins, and anthocyanins. Its size and density contribute to its unique properties.
2. Blueberry seeds, despite their honeycomb-like structure, are smaller and less dense than seeds from other fruits, which impacts their structural stability.
3. The pomace under the skin, soft and watery in texture, contains most of the fruit's water and sugars.

### Blueberry Pomace: General Process Overview

This section details the thermomechanical treatment of approximately 420 kg of blueberry pomace with an initial moisture content of 65%. Following pre-drying in a rotary dryer at 45°C, the pomace was reduced to a moisture content of 23%. The pre-dried pomace, now weighing 191 kg, was processed in a double screw reactor, yielding 169 kg of cylindroform biomaterial with 13% moisture. After a final drying stage, 155 kg of biomaterial with 5% moisture was obtained and then micronized, producing 152 kg of the final product with 3% moisture. The structural characteristics of blueberries, including the thin and soft skin and small seeds, impart moderate structural support to the pomace.

### Blueberry Pomace: Detailed Description of the Thermomechanical Conversion Process

1. The thermomechanical conversion process of blueberry pomace requires a single shearing stage for effective crushing, given the small size and low hardness of the seeds. The inclusion of vegetable oil is necessary to create an emulsion in the process, crucial for forming a compact, manageable cylindroform biomaterial.

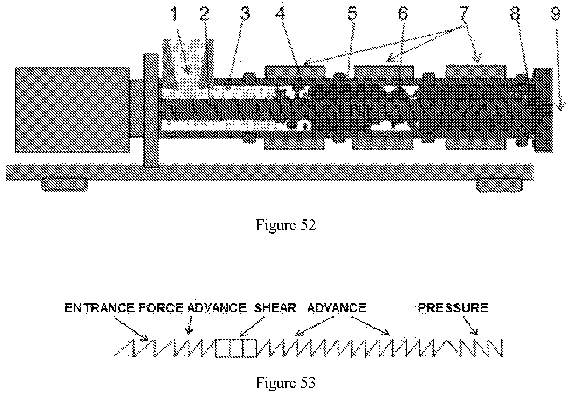

2. Figure 52 outlines the reactor setup for water and oil injection, temperature induction, pressure, and other elements necessary for converting blueberry pomace into a cylindroform biomaterial. The configuration allows for controlled advancement, shearing, kneading, and crushing, along with pressure generation and temperature control, essential for the final product.
3. The feeder hopper is adjusted to accommodate the low compactability level of the material, with a capacity range of 40 to 80 kg.

### Blueberry Pomace: Bioactive Compounds

1. The pomace and skin of blueberries are rich in anthocyanins, flavonoids, and vitamin C. These compounds provide potent antioxidant properties, contributing to cardiovascular health, cognitive function, eye health, and immune system support.
2. Blueberry seeds contain essential fatty acids and dietary fiber, beneficial for heart, nervous system, and digestive health.
3. The synergistic interaction of these bioactive compounds enhances their health benefits, making the whole blueberry, including the pomace and skin, a valuable source of nutrients.

This comprehensive approach to blueberry pomace processing and its bioactive compounds underscores the potential of this byproduct in various applications, maximizing the health benefits of blueberries.

### COMPARATIVE TABLE OF PROCESS VARIABLES

Below is Table 7 summarizing the ranges of variables involved in the complete process for all the studied pomaces.

Please note that this table summarizes the ranges of process variables for various fruit types, and the description at the beginning of the table mentions that the invention is not limited to specific EMBODIMENTs and allows for modifications and variations within the spirit and scope of the invention as described in Table 7.

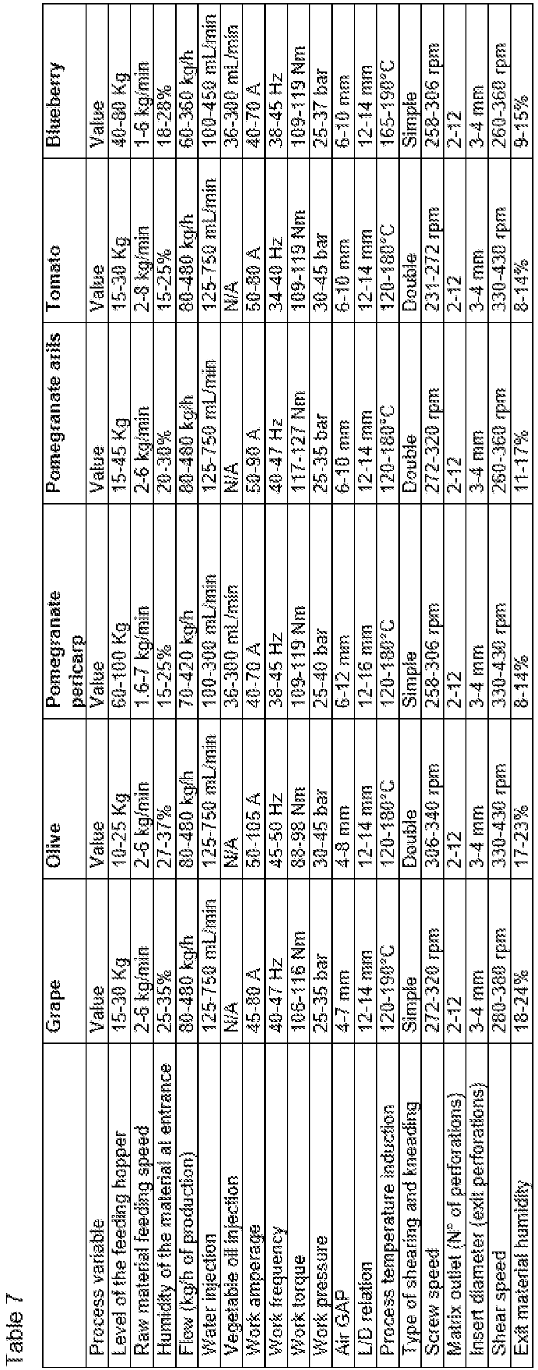

## Claims

1. Quasy-brittle biomaterial, which can be easily reduced to ultrafine powder, **CHARACTERIZED by** consisting of a derivative of vegetable pomace, with a compression resistance between 260 kPa and 360 kPa and a porosity of at least 35%.

2. The biomaterial according to claim 1, **CHARACTERIZED in that** it comprises:
a) an external structure corresponding to an easily fracturable disaggregated structure, with a low structural support integrity and non-cohesive domains; and
b) an internal structure, corresponding to a semi-compact structure with some planar areas, due to the vitrification of some macromolecules, which provides fragility to the biomaterial.

3. Multifunctional micronized ingredient, **CHARACTERIZED by** consisting of a homogeneous derivative of vegetable pomace, with a particle size smaller than 74 | |m, obtained through of a micronization step of the biomaterial according to claim 1.

4. Thermomechanical process for the complete elimination and transformation of agro-industrial solid wastes or vegetable pomaces into the biomaterial according to claim 1, **CHARACTERIZED by** comprising the following steps:
• provision of vegetable pomace;
• pre-drying of the vegetable pomace;
• feeding the previously dried vegetable pomace into a reactor through a feed hopper at room temperature;
• thermomechanical conversion of the previously dried vegetable pomace to obtain the biomaterial, comprising the sub-steps of:
- gradual heating of the vegetable pomace;
- advancement of the vegetable pomace to a vitrification zone;
- extrusion of the mixture through nozzles determining the shape and size of the final product.

5. The process of claim 4, **CHARACTERIZED by** having a step of cleaning the vegetable pomace before or after the pre-drying step.

6. The process of claim 5, **CHARACTERIZED in that** the cleaning step comprises cleaning by specific weight and/or an electromagnetic cleaning to eliminate the presence of any foreign bodies that can damage the mechanisms of the thermomechanical conversion process.

7. The process according to claim 4, **CHARACTERIZED in that** the sub-step of advancing the vegetable pomace to a vitrification zone comprises:
- heating of the vegetable pomace;
- shearing if of the vegetable pomace; and
- compression of the vegetable pomace.

8. The process according to claim 7, **CHARACTERIZED in that** the sub-steps in the vitrification zone are performed in different order, sequentially or simultaneously, depending on the type of pomace to be processed.

9. The process according to claim 4, **CHARACTERIZED in that** during the extrusion sub-step, due to the pressure difference, the expansion and drying of the formed quasy-brittle material occurs.

10. Use of the multifunctional micronized ingredient according to claim 3, **CHARACTERIZED in that** it is useful as an ingredient in the food industry.

11. Use of the multifunctional micronized ingredient according to claim 3, **CHARACTERIZED by** serving as an ingredient in the nutraceutical industry.

12. Use of the multifunctional micronized ingredient according to claim 3, **CHARACTERIZED by** serving as an ingredient in the cosmetic industry.

13. Use of the multifunctional micronized ingredient according to claim 3, **CHARACTERIZED by** serving as an ingredient in the pharmaceutical industry.
